# EUROPEAN PATENT APPLICATION

(11) **EP 4 753 333 A1**
(43) Date of publication of application: **03.06.2026**
(21) Application number: 24913303.4
(22) Date of filing: 30.09.2024
(51) Int. Cl.: H04W 40/24, H04W 40/02, H04W 76/22, H04W 76/12, H04W 48/18, H04L 41/16, G06N 3/02

(54) **ELECTRONIC DEVICE AND METHOD USING NETWORK SLICE, AND STORAGE MEDIUM**

(30) Priority: 28.12.2023 KR 20230193806; 30.01.2024 KR 20240013938
(71) Applicant: Samsung Electronics Co., Ltd., Suwon-si, Gyeonggi-do 16677 (KR)
(72) Inventor: KIM, Jihwan, Suwon-si Gyeonggi-do 16677 (KR); KIM, Dongwoo, Suwon-si Gyeonggi-do 16677 (KR); PARK, Jaesung, Suwon-si Gyeonggi-do 16677 (KR); SIM, Hongcheol, Suwon-si Gyeonggi-do 16677 (KR); RYU, Bohyun, Suwon-si Gyeonggi-do 16677 (KR); LEE, Hakkeon, Suwon-si Gyeonggi-do 16677 (KR)
(74) Representative: Nederlandsch Octrooibureau
(86) International application number: PCT/KR2024/014885
(87) International publication number: WO 2025/143462

(57) **Abstract**

According to an embodiment, an electronic device may store memory configured to store instructions. The electronic device may include at least one processor. The instructions may cause, when individually or collectively executed by the at least one processor, the electronic device to, based on result of inputting, into a traffic category classification model, first data associated with a traffic of a first application in a fist data structure including a plurality of first time points and a plurality of first network parameter groups respectively corresponding to the plurality of first time points, identify that the traffic of the first application corresponds to a first category. The instructions may cause, when executed by at least the part of the at least one processor, the electronic device to perform at least one operation causing transmission and/or reception of a first traffic of the first application through a first data transmission path corresponding to the first category. Various other embodiments are possible.

## Description

### [TECHNICAL FIELD]

The present disclosure relates generally to electronic devices, and more particularly, to an electronic device and a method using a network slice and a storage medium.

### [BACKGROUND ART]

Efforts to develop improved 5th generation (5G) communication systems and/or pre-5G communication systems may have been made in order to potentially meet increasing wireless data traffic demands since 4th generation (4G) communication systems were commercialized. At least for this reason, 5G communication systems and/or pre-5G communication systems may be referred to as beyond 4G network communication system and/or a post-Long-Term Evolution (LTE) systems.5G communication systems may be implemented in a relatively high frequency band (e.g., a millimeter wave (mmWave) band, a 28 gigahertz (GHz) band, or a 60 GHz band) in order to attempt to achieve a high data transmission rate. The 5G communication systems may implement technologies such as, but not limited to, beamforming, massive multiple-input multiple-output (MIMO), full dimensional MIMO (FD-MIMO), array antennas, analog beamforming, or large scale antennas to potentially mitigate a propagation path loss of radio waves and/or to potentially increase a propagation transmission distance of the radio waves in the operating frequency band.

Introduction of a network slicing technology for radio access network (RAN) and core network (CN) structures may be included among potentially new structural characteristics of 5G communication systems. The network slicing technology may group network resources and/or network functions into one independent network slice according to an individual service and may provide the one independent network slice, so as to apply attributes such as, but not limited to, isolation, customization, and independent management and orchestration of network system functions and resources to a mobile communication network structure. Through the use of the network slicing technology, a 5G communication system it may select and/or combine network functions according to a reference of a service, a user, or a business model, and as such, may provide an independent and flexible 5G service.

In the 3rd Generation Partnership Project (3GPP), a user equipment (UE) route selection policy (URSP) rule may be defined. A UE may receive the URSP rule from a policy control function (PCF) and may establish a data session with a network slice. The URSP rule may include a traffic descriptor and/or a route selection descriptor.

The above information may be provided as background art to assist in understanding this document. None of the aforementioned content may be claimed as prior art related to this document or used to determine prior art.

### [DETAILED DESCRIPTION OF THE INVENTION]

### [TECHNICAL SOLUTION]

According to an embodiment, an electronic device may store memory configured to store instructions. The electronic device may include at least one processor. The instructions may cause, when individually or collectively executed by the at least one processor, the electronic device to, based on result of inputting, into a traffic category classification model, first data associated with a traffic of a first application in a fist data structure including a plurality of first time points and a plurality of first network parameter groups respectively corresponding to the plurality of first time points, identify that the traffic of the first application corresponds to a first category. The instructions may cause, when executed by at least the part of the at least one processor, the electronic device to perform at least one operation causing transmission and/or reception of a first traffic of the first application through a first data transmission path corresponding to the first category.

According to an embodiment, a computer-readable storage medium storing instructions may be provided. The instructions may cause, when individually or collectively executed by the at least one processor, the electronic device to perform at least one operation. The at least one operation may include, based on result of inputting, into a traffic category classification model, first data associated with a traffic of a first application in a fist data structure including a plurality of first time points and a plurality of first network parameter groups respectively corresponding to the plurality of first time points, identifying that the traffic of the first application corresponds to a first category. The at least one operation may include performing at least one operation causing transmission and/or reception of a first traffic of the first application through a first data transmission path corresponding to the first category.

According to an embodiment, a method of operating an electronic device may include, based on result of inputting, into a traffic category classification model, first data associated with a traffic of a first application in a fist data structure including a plurality of first time points and a plurality of first network parameter groups respectively corresponding to the plurality of first time points, identifying that the traffic of the first application corresponds to a first category. The method of operating the electronic device may include performing at least one operation causing transmission and/or reception of a first traffic of the first application through a first data transmission path corresponding to the first category.

### [BRIEF DESCRIPTION OF DRAWINGS]

The above and other aspects, features, and advantages of certain embodiments of the present disclosure may be more apparent from the following description taken in conjunction with the accompanying drawings, in which:
FIG. 1 is a block diagram of an electronic device within a network environment, according to an embodiment;
FIG. 2A is a block diagram of an electronic device for supporting legacy network communication and fifth generation (5G) network communication, according to an embodiment;
FIG. 2B is a block diagram of the electronic device for supporting legacy network communication and 5G network communication, according to an embodiment;
FIG. 3A illustrates a 5G system structure, according to an embodiment;
FIG. 3B illustrates a 5G network slice structure, according to an embodiment;
FIG. 4 is a diagram illustrating operations of entities executed in the electronic device, according to an embodiment;
FIG. 5 is a flowchart illustrating a method of operating the electronic device, according to an embodiment;
FIG. 6A illustrates a data structure of data input into a traffic category classification model, according to an embodiment;
FIG. 6B illustrates inference by an artificial intelligence (AI), model, according to an embodiment;
FIGS. 6C to 6G illustrate data, according to various embodiments;
FIG. 7A is a flowchart illustrating a method of operating the electronic device, according to an embodiment;
FIG. 7B illustrates a category change, according to an embodiment;
FIG. 7C illustrates a change in a data transmission path to be used, according to an embodiment;
FIG. 8A is a flowchart illustrating a method of operating the electronic device, according to an embodiment;
FIG. 8B is a flowchart illustrating a method of operating the electronic device, according to an embodiment;
FIG. 8C is a flowchart illustrating a method of operating the electronic device, according to an embodiment;
FIG. 9 is a flowchart illustrating a method of operating the electronic device, according to an embodiment;
FIG. 10 is a flowchart illustrating a method of operating the electronic device, according to an embodiment;
FIG. 11A is a flowchart illustrating a method of operating the electronic device, according to an embodiment;
FIG. 11B illustrates additional groups, according to an embodiment;
FIG. 12A is a flowchart illustrating a method of operating the electronic device, according to an embodiment;
FIG. 12B illustrates data for each time interval, according to an embodiment;
FIG. 13A is a flowchart illustrating a method of operating the electronic device, according to an embodiment;
FIG. 13B illustrates data for each internet protocol (IP) flow, according to an embodiment;
FIG. 14A is a flowchart illustrating a method of operating the electronic device, according to an embodiment;
FIG. 14B is a flowchart illustrating a method of operating the electronic device, according to an embodiment; and
FIG. 14C is a flowchart illustrating a method of operating an electronic device, according to an embodiment.

### [MODE FOR CARRYING OUT THE INVENTION]

The following description with reference to the accompanying drawings is provided to assist in a comprehensive understanding of embodiments of the present disclosure defined by the claims and their equivalents. Various specific details are included to assist in understanding, but these details are considered to be exemplary only. Therefore, those of ordinary skill in the art may recognize that various changes and modifications of the embodiments described herein may be made without departing from the scope and spirit of the disclosure. In addition, descriptions of well-known functions and structures are omitted for clarity and conciseness.

With regard to the description of the drawings, similar reference numerals may be used to refer to similar or related elements. It is to be understood that a singular form of a noun corresponding to an item may include one or more of the things, unless the relevant context clearly indicates otherwise. It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wired), wirelessly, or via a third element. In contrast, when an element is referred to as being "directly connected to" or "directly coupled to" another element or layer, there are no intervening elements present.

The terms "first," "second," third" may be used to describe various elements but the elements are not limited by the terms and a "first element" may be referred to as a "second element". Alternatively or additionally, the terms "first", "second", "third", and the like may be used to distinguish components from each other and do not limit the present disclosure. For example, the terms "first", "second", "third", and the like may not necessarily involve an order or a numerical meaning of any form.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of exemplary approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

Hereinafter, various embodiments of the present disclosure are described with reference to the accompanying drawings.

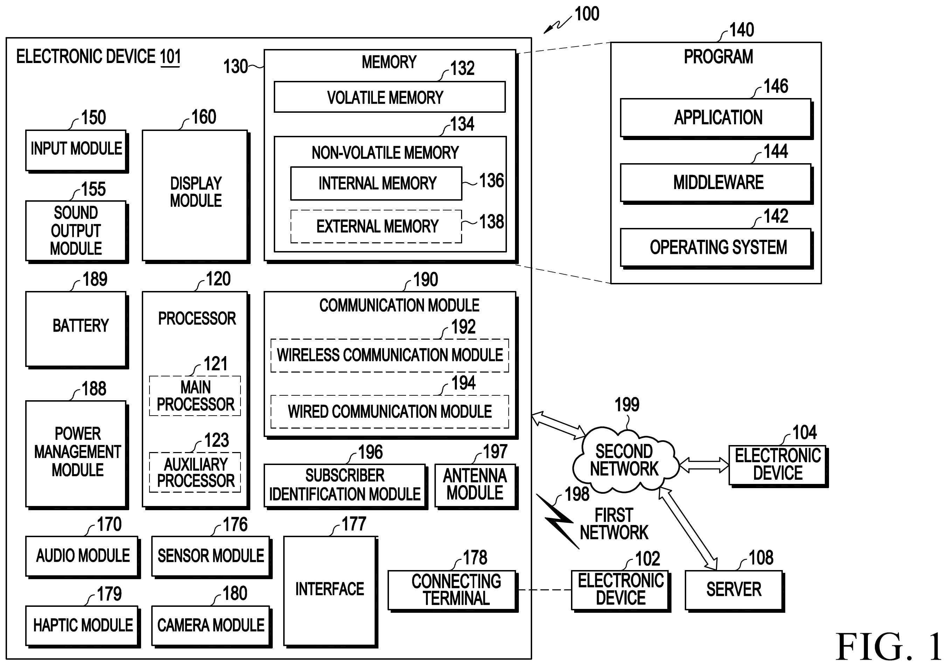

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

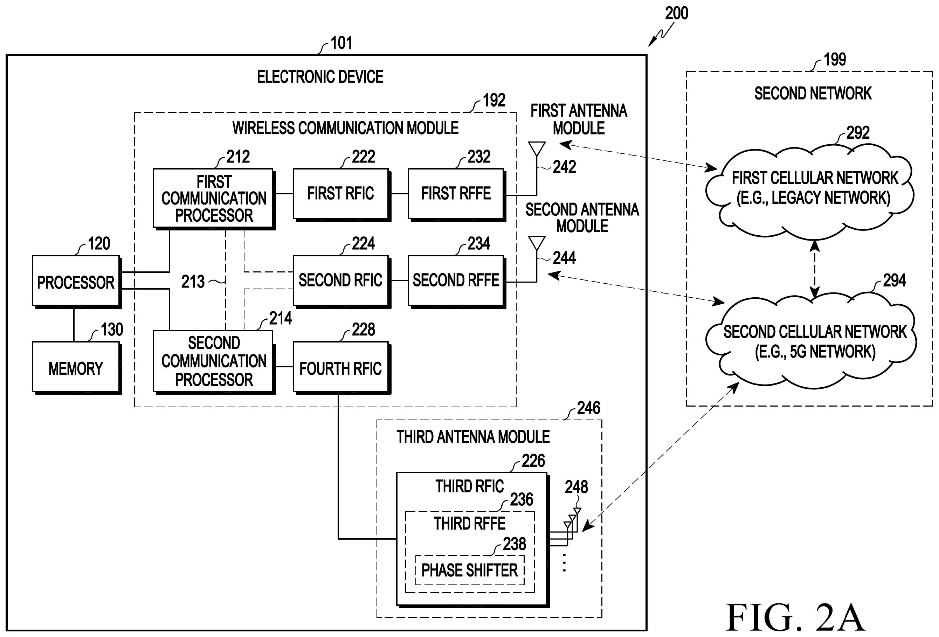

FIG. 2A is a block diagram 200 of the electronic device 101 for supporting legacy network communication and 5G network communication, according to an embodiment. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and a plurality of antennas 248. The electronic device 101 may further include the processor 120 and the memory 130. A second network 199 may include a first cellular network 292 and a second cellular network 294. According to an embodiment, the electronic device 101 may further include at least one of the elements illustrated in FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may configure at least some of the wireless communication module 192. According to an embodiment, the fourth RFIC 228 may be omitted or may be included as a part of the third RFIC 226.

The first communication processor 212 may support establishment of a communication channel in a band to be used for wireless communication with the first cellular network 292 and legacy network communication through the established communication channel. According to various embodiments, the first cellular network may be and/or may include a legacy network such as, but not limited to, a second generation (2G), third generation (3G), fourth generation (4G), or a Long-Term Evolution (LTE) network. The second communication processor 214 may support establishment of a communication channel corresponding to a predetermined band (e.g., about 6 gigahertz (GHz) to about 60 GHz) from among bands to be used for wireless communication with the second cellular network 294 and 5G network communication through the established communication channel. According to various embodiments, the second cellular network 294 may be a 5G network as defined in the 3rd Generation Partnership Project (3GPP). According to an embodiment, the first communication processor 212 and/or the second communication processor 214 may support establishment of a communication channel corresponding to another predetermined band (e.g., equal to or lower than about 6 GHz) from among bands to be used for wireless communication with the second cellular network 294 and 5G network communication through the established communication channel.

The first communication processor 212 may transmit and/or receive data to and/or from the second communication processor 214. For example, data classified to be transmitted through the second cellular network 294 may be changed to be transmitted through the first cellular network 292. In such a case, the first communication processor 212 may receive transmission data from the second communication processor 214. For example, the first communication processor 212 may transmit and/or receive data to and/or from the second communication processor 214 through an inter-processor interface 213 between processors. The inter-processor interface 213 may be implemented as, for example, a universal asynchronous receiver/transmitter (UART) (e.g., a high speed-UART (HS-UART) or a Peripheral Component Interconnect bus express (PCIe) interface). However, the present disclosure is not limited in this regard. Alternatively or additionally, the first communication processor 212 and/or the second communication processor 214 may exchange control information and packet data information through, for example, a shared memory. The first communication processor 212 may transmit and/or receive various pieces of information such as, but not limited to, sensing information, information on an output intensity, or resource block (RB) allocation information, to and/or from the second communication processor 214.

According to an embodiment, the first communication processor 212 may not be directly connected to the second communication processor 214. In such a case, the first communication processor 212 may transmit and/or receive data to and/or from the second communication processor 214 through the processor 120 (e.g., an application processor). For example, the first communication processor 212 and/or the second communication processor 214 may transmit and/or receive data to and/or from the processor 120 (e.g., an application processor) through an HS-UART interface or a PCIe interface. However, the present disclosure is not limited in this regard. Alternatively or additionally, the first communication processor 212 and/or the second communication processor 214 may exchange control information and/or packet data information with the processor 120 (e.g., an application processor) through a shared memory.

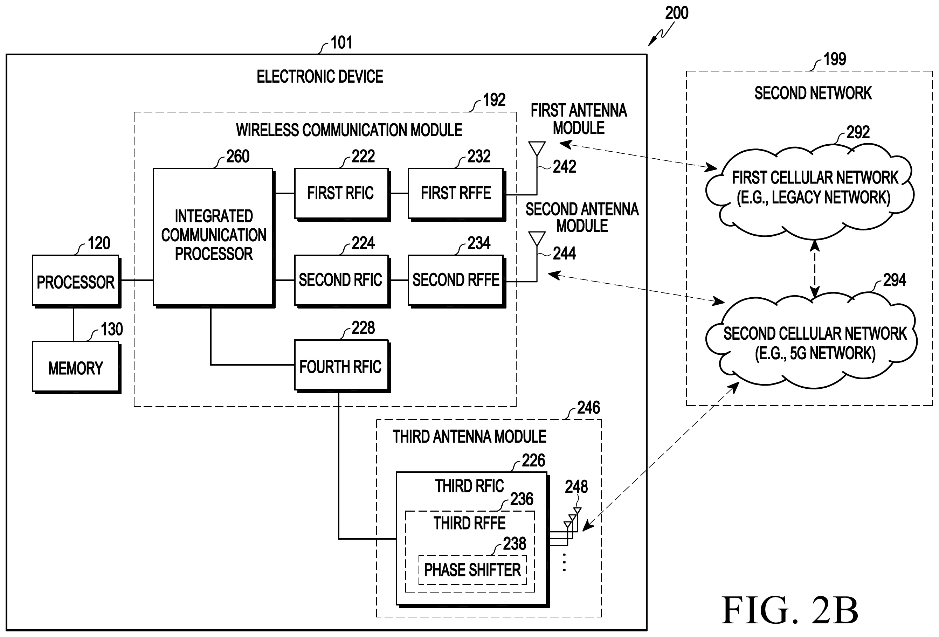

According to an embodiment, the first communication processor 212 and/or the second communication processor 214 may be implemented within a single chip and/or a single package. According to various embodiments, the first communication processor 212 and/or the second communication processor 214 may be configured with the processor 120, the auxiliary processor 123, or the communication module 190 within a single chip and/or a single package. For example, as shown in FIG. 2B, a unified communication processor 260 may support functions for communication with the first cellular network 292 and/or the second cellular network 294.

In an embodiment, at least one of the processor 120, the first communication processor 212, the second communication processor 214, or the unified communication processor 260 may be implemented as a single chip and/or a single package. In such a case, the single chip and/or the single package may include a memory (and/or storage means) that may store instructions causing the performance of at least some of the operations performed according to various embodiments and a processing circuit for executing the instructions. The present disclosure is not limited on the type of processing circuit, and as such, the single chip and/or the single package may include, but not be limited to, a calculation circuit, a general purpose processor, or other programmable logic device, discrete gate, or transistor logic, discrete hardware components, or any combination thereof designed to perform the functions described herein. A general purpose processor may include a microprocessor, or any conventional processor, controller, microcontroller, or state machine.

In transmission, the first RFIC 222 may convert a baseband signal generated by the first communication processor 212 into a radio frequency (RF) signal of about 700 megahertz (MHz) to about 3 GHz used for the first cellular network 292 (e.g., a legacy network). In reception, the RF signal may be acquired from the first cellular network 292 (e.g., the legacy network) through an antenna (e.g., the first antenna module 242) and may be preprocessed through the RFFE (e.g., the first RFFE 232). The first RFIC 222 may convert the preprocessed RF signal into a baseband signal to be processed by the first communication processor 212.

In transmission, the second RFIC 224 may convert a baseband signal generated by the first communication processor 212 and/or the second communication processor 214 into an RF signal (hereinafter referred to as a 5G Sub6 RF signal) in a Sub6 band (e.g., a band having frequencies equal to or lower than about 6 GHz) used in the second cellular network 294 (e.g., the 5G network). In reception, a 5G Sub6 RF signal may be acquired from the second cellular network 294 (e.g., the 5G network) through an antenna (e.g., the second antenna module 244) and may be preprocessed through the RFFE (e.g., second RFFE 234). The second RFIC 224 may convert the preprocessed 5G Sub6 RF signal into a baseband signal to be processed by the corresponding communication processor from among the first communication processor 212 or the second communication processor 214.

The third RFIC 226 may convert a baseband signal generated by the second communication processor 214 into an RF signal (hereinafter referred to as a 5G Above6 RF signal) in a 5G Above6 band (e.g., a band having frequencies from about 6 GHz to about 60 GHz) used by the second cellular network 294 (e.g., the 5G network). In reception, a 5G Above6 RF signal may be acquired from the second cellular network 294 (e.g., the 5G network) through an antenna (e.g., one or more antennas of the plurality of antennas 248) and may be preprocessed through the third RFFE 236. The third RFIC 226 may convert the preprocessed 5G Above6 RF signal into a baseband signal to be processed by the second communication processor 214. According to an embodiment, the third RFFE 236 may be configured as a part of the third RFIC 226.

The electronic device 101 may include the fourth RFIC 228 separately from the third RFIC 226 or as a part thereof according to an embodiment. In such a case, after converting a baseband signal generated by the second communication processor 214 into an RF signal (hereinafter referred to as an intermediate frequency (IF) signal) in an IF band (e.g., a band having frequencies from about 9 GHz to about 11 GHz), the fourth RFIC 228 may transmit the IF signal to the third RFIC 226. The third RFIC 226 may convert the IF signal into a 5G Above6 RF signal. In reception, a 5G Above6 RF signal may be received from the second cellular network 294 (e.g., 5G network) through an antenna (e.g., one or more antennas of the plurality of antennas 248) and converted into an IF signal by the third RFIC 226. The fourth RFIC 228 may convert the IF signal into a baseband signal to be processed by the second communication processor 214.

According to an embodiment, the first RFIC 222 and/or the second RFIC 224 may be implemented as at least a portion of a single chip or a single package. According to various embodiments, when the first RFIC 222 and the second RFIC 224 are implemented as a single chip or a single package, as shown in FIG. 2A or FIG. 2B, the first RFIC 222 and the second RFIC 224 may be implemented as an integrated RFIC. In such a case, the integrated RFIC may be connected to the first RFFE 232 and the second RFFE 234 to convert a baseband signal into a signal in a band supported by the first RFFE 232 and/or the second RFFE 234, and may transmit the converted signal to one of the first RFFE 232 and the second RFFE 234. According to an embodiment, the first RFFE 232 and the second RFFE 234 may be implemented as at least a portion of a single chip or a single package. According to an embodiment, at least one of the first antenna module 242 or the second antenna module 244 may be omitted and/or may be connected to another antenna module to process RF signals in a plurality of corresponding bands.

According to an embodiment, the third RFIC 226 and the plurality of antennas 248 may be disposed on the same substrate to configure the third antenna module 246. For example, the wireless communication module 192 and/or the processor 120 may be disposed on a first substrate (e.g., main PCB). In such a case, the third RFIC 226 may be disposed in a partial area (e.g., bottom side) of a second substrate (e.g., a sub PCB) separated from the first substrate and the plurality of antennas 248 may be disposed in another partial area (e.g., a top side) to configure the third antenna module 246. By disposing the third RFIC 226 and the plurality of antennas 248 on the same substrate, it may be possible to reduce the length of a transmission line therebetween. This is to reduce loss (for example, attenuation) of the signal in a high frequency band (for example, about 6 GHz to about 60 GHz) used for, for example, 5G network communication due to the transmission line. Accordingly, the electronic device 101 may have an improved quality and/or speed of communication with the second cellular network 294 (e.g., the 5G network), when compared to a related electronic device.

According to an embodiment, the plurality of antennas 248 may be configured as an antenna array including a plurality of antennal elements which may be used for beamforming. In such a case, the third RFIC 226 may include, for example, a plurality of phase shifters 238 corresponding to the plurality of antenna elements as a part of the third RFFE 236. In transmission, each of the plurality of phase shifters 238 may convert a phase of a 5G Above6 RF signal to be transmitted to the outside of the electronic device 101 (e.g., a base station of the 5G network) through a corresponding antenna element. In reception, each of the plurality of phase shifters 238 may convert the phase of the 5G Above6 RF signal received from the outside through the corresponding antenna element into a substantially similar and/or the same phase. In such a manner, transmission and/or reception through beamforming between the electronic device 101 and the outside may be enabled.

The second cellular network 294 (e.g., 5G network) may operate independently from the first cellular network 292 (e.g., legacy network) (e.g., stand-alone (SA)) or may operate through a connection to thereto (e.g., non-standalone (NSA)). For example, in the 5G network, only an access network (e.g., a 5G radio access network (RAN) or a next generation RAN (NG RAN)) may exist without a core network (e.g., a next generation core (NGC)). In such a case, the electronic device 101 may access the access network of the 5G network and may access an external network (e.g., internet) under the control of the core network (e.g., evolved packed core (EPC) of the legacy network). Protocol information (e.g., LTE protocol information) for communication with the legacy network and protocol information (e.g., new radio (NR) protocol information) for communication with the 5G network may be stored in the memory 230 and may be accessed by another element (e.g., the processor 120, the first communication processor 212, or the second communication processor 214).

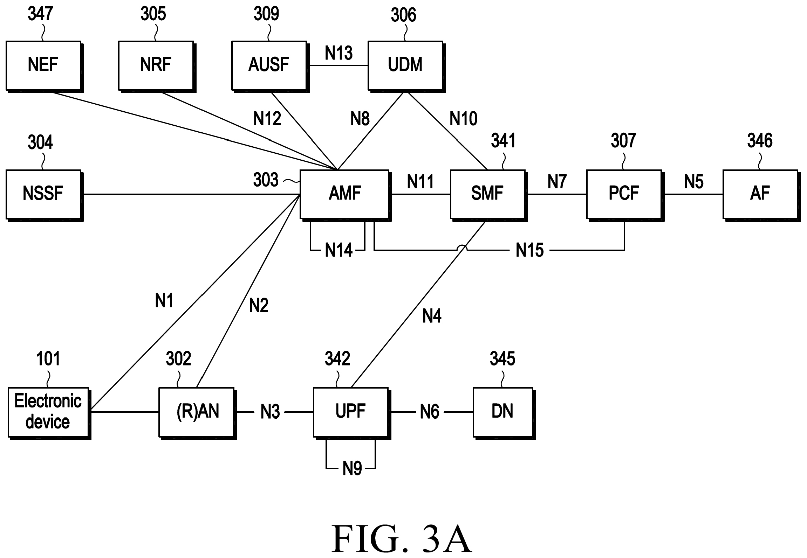

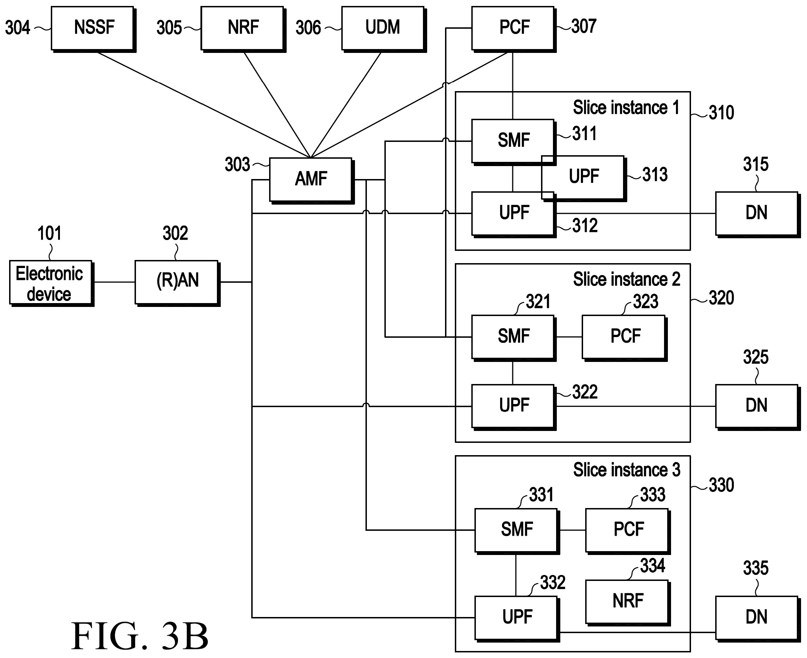

FIG. 3A illustrates the 5G system structure, according to an embodiment. FIG. 3B illustrates the 5G network slice structure, according to an embodiment. Hereinafter, the overall 5G system and the network slice are described with reference to FIGS. 3A and 3B.

As shown in FIG. 3A, the 5G system structure may include the electronic device 101 (e.g., a user equipment (UE)), a radio access network ((R)AN) 302, a data network (DN) 345, and a plurality of network functions (NFs) within a core network (CN), which may correspond to network elements.

The 5G system structure may be defined by a function, a connection point, and a protocol for each of a plurality of NFs and may be illustrated using a reference point indicating an interface based on a service corresponding to the NF and a reference point indicating an interaction existing between NFs.

The plurality of network functions may include an authentication server function (AUSF) 309, an access and mobility management function (AMF) 303, a network exposure function (NEF) 347, a network function repository function (NRF) 305, a policy control function (PCF) 307, a session management function (SMF) 341, a unified data management (UDM) 306, a user plane function (UPF) 342, an application function (AF) 346, and a network slice selection function (NSSF) 304.

In various embodiments of the disclosure, the AMF, the SMF, the PCF, and the UPF may play a role in establishing a protocol data unit (PDU) session requested by the UE (e.g., a UE-requested PDU) and managing traffic between the UE and the DN.

A reference point between the electronic device 101 and the AMF 303 may be referred to as N1.

The (R)AN 302 may indicate a base station using a radio access technology (RAT). For example, the AN 302 may be a base station including a 3GPP access technology and/or a base station including a non-3GPP access technology such as, but not limited to, Wi-Fi. A reference point between the AN 302 and the AMF 303 may be referred to as N2, and a reference point between the AN 302 and the UPF 342 may be referred to as N3.

The DN 345 may transfer a PDU to be transmitted in a downlink direction to the UPF 342 and may receive a PDU transmitted from the electronic device 101 through the UPF 342. A reference point between the DN 345 and the UPF 342 may be referred to as N6.

The AMF 303 may provide a function independent from the access technology, for example, an access and mobility management function in units of the electronic device 101. A reference point between the AMF 303 and the UDM 306 may be referred to as N8, a reference point between the AMF 303 and the AUSF 309 may be referred to as N12, and a reference point between the AMF 303 and the SMF 341 may be referred to as N11.

When one electronic device 101 has a plurality of sessions, different SMFs 341 may be assigned to respective sessions, and thus, the SMF 341 may provide a session management function for managing each session. Reference point N4 may be defined to allow the SMF 341 to configure the UPF 342 by using the generated control signal information and the UPF 342 may report its own state to the SMF 341. A reference point between the SMF 341 and the UDM 306 may be referred to as N10, a reference point between the SMF 341 and the PCF 305 may be referred to as N7.

For example, each electronic device 101 may be connected to one AMF 303, but, in the case of the SMF 341, one electronic device 101 may establish a plurality of sessions, and thus, may have different SMFs (e.g., a first SMF 311, a second SMF 321, and a third SMF 331) for respective sessions.

The AF 346 may provide information on the packet flow to the PCF 307 serving to perform policy control in order to potentially guarantee a quality of service (QoS).

The PCF 307 may determine a policy such as session management and mobility management, based on the information on the packet flow for guaranteeing the QoS, and may transfer the determined policy to the AMF 303 and the SMF 341, so as to perform at least one of mobility management, session management, and QoS management. A reference point between the AF 346 and the PCF 307 may be referred to as N5, a reference point between two AMFs 303 may be referred to as N14, and a reference point between the AMF 303 and the PCF 307 may be referred to as N15.

The AUSF 309 may store data for authenticating the electronic device 101.

The UDM 306 may store at least some pieces of user subscription data and policy data. A reference point between the AUSF 309 and the UDM 306 may be referred to as N13.

Communication processor (CP) functions may include various functions for controlling the network and the UE, and the electronic device 101, the (R)AN 302. For example, the UPF 342, the AMF 303, the AF 346, and the DN 345 serving to perform the mobility management function and the SMF 341 serving to perform the session management function may be two representative functions that may be included in the CP functions as two independent functions.

As used herein, a slice, a service, a network slice, a network service, an application slice, and an application service may be interchangeably used.

The mobile network operator may allocate network resources that may be suitable for the corresponding service for each slice and/or each set of specific slices. The network resources may be and/or may include the network function (NF) or at least one of allocation of logical resources or radio resources provided by the network function (NF).

Network slicing may refer to a technology of grouping network resources and/or network functions into one independent slice according to the service and providing the slice to apply attributes such as, but not limited to, network isolation, customization, and independent management and orchestration to the structure of the mobile communication core network.

Network slicing may be a new concept of the 5G core network. Through the network slicing, the network operator may independently allocate network resources specialized for each service and/or user and may secure flexibility of the network through resource virtualization based on software defined networking (SDN) and network function virtualization (NFV) technology, so as to potentially guarantee expandability and/or reliability to operate services and network resources.

A public land mobile network (PLMN) may provide a plurality of network slices, and each network slice may be provided to the UE in the form of slice instances. For example, the PLMN may include a first slice instance 310, a second slice instance 320, and a third slice instance 330.

The electronic device 101 may access the network to simultaneously (e.g., at a substantially similar and/or the same time) and/or sequentially receive services from at least one of the plurality of slice instances 310 to 330.

Each slice instance of the plurality of slice instances 310 to 330 may include network resources required for providing the corresponding network slice. For example, the first slice instance 310 may include the first SMF 311 and the first and second UPFs 312 and 313, the second slice instance 320 may include the second SMF 321, the third UPF 322, and the first PCF 323, and the third slice instance 330 may include the third SMF 331, the fourth UPF 332, the second PCF 333, and the NRF 334.

Referring to FIGS. 3A and 3B, the second SMF 321 of the second slice instance 320 may be connected to the PCF 307 of the PLMN level and the first PCF 323 of the slice level. The PCF 307 of the PLMN level may manage policy information of the PLMN level and provide the policy information to the second SMF 321. The first PCF 323 of the slice level belonging to the second slice instance 320 may manage a policy required for providing the corresponding slice and provide the corresponding information to the second SMF 321.

Each slice may be distinguished by a slice ID. For example, the slice ID may be and/or may include a single-network slice selection assistance information (S-NSSAI) as defined by the 3GPP. According to various embodiments, the electronic device 101 may store information on the configured network slice selection assistance information (configured NSSAI) and the information on a network slice selection policy (NSSP). The configured NSSAI may include a list of S-NSSAI of the network slices in which the electronic device 101 subscribes to a home PLMN (HPLMN). The list of S-NASSAI may include at least one S-NSSAI ID. For example, the list of S-NASSAI may include a first S-NASSAI #a, a second S-NASSAI #b, a third S-NASSAI #c, and a fourth S-NASSAI #d. The configured NSSAI may be determined based on subscription information of the electronic device 101, and thus, the S-NSSAI included in the configured NSSAI may be different for each electronic device 101. Alternatively or additionally, the configured NSSAI may be determined based on subscription information of the electronic device 101, and thus, the configured NSSAI stored in the electronic device 101 may be changed when the subscription information of the electronic device 101 is changed. The list of S-NSSAI to which the electronic device 101 in the configured NSSAI subscribes may be stored in the integrated UDM 306 for storing subscription information of the electronic device 101. The S-NSSAI to which the electronic device 101 subscribes, stored in the UDM 306 may be referred to as subscribed S-NSSAI. The NSSP may indicate mapping information between S-NSSAI (e.g., the S-NSSAI ID) to which the electronic device 101 subscribes and an application which may be supported by the corresponding S-NSSAI. One S-NSSAI ID may be mapped to at least one application. For example, S-NASSAI #a may be mapped to a first application and a second application, S-NASSAI #b may be mapped to the first application, S-NASSAI #c may be mapped to a third application, and S-NASSAI # may be mapped to all supportable applications. The NSSP may be stored in the electronic device 101 and the policy control function (PCF), which may store network-related policy information. Alternatively or additionally, the NSSP may be stored in the user data repository (UDR), and the PCF may make a request for NSSP information to the UDR as necessary to acquire the NSSP information from the UDR. When the subscription information of the electronic device 101 is changed, subscribed S-NSSAI of the electronic device 101 stored in the UDM 306 may be changed. When the subscription information of the electronic device 101 is changed, NSSP information stored in the PCF or the UDR may be changed. When at least one of the subscribed S-NSSAI or the NSSPs is changed, relevant configuration information stored in the electronic device 101 may need to be updated.

For example, the electronic device 101 (e.g., at least one of the processor 120, the first communication processor 212, the second communication processor 214, or the unified communication processor 260) may acquire a URSP rule shown in Table 1 (e.g., according to Technical Specification (TS) 25.503 of the 3GPP) from a network (e.g., the PCF).

**[Table 1]**

| **Rule Number** | **Rule Precedence** | **Traffic Descriptor** | **Route Selection Descriptor** |
|---|---|---|---|
| 1 | 1 | App Descriptor = AppID1 | Precedence = 1 |
| | | | Network Slice Selection = S-NSSAI-a |
| | | | Access Type Preference = 3GPP-Access |
| | | | DNN Selection = DNN_a |
| 2 | 2 | Connection Capabilities = "real time interactive" | Precedence = 1 |
| | | | S-NSSAI = S-NSSAI-b |
| | | | SSC Model Selection = SSC Mode 1 |
| 3 | 3 | Connection Capabilities = "unified communication traffic" | Precedence = 1 |
| | | | Network Slice Selection = S-NSSAI-a |
| | | | Access Type Preference = 3GPP-Access |
| | | | DNN Selection = DNN_b |
| 4 | 4 | Connection Capabilities = "real time streaming" | Precedence = 1 |
| | | | Network Slice selection = S-NSSAI-b |
| | | | Access Type Preference = 3GPP-Access |
| | | | DNN Selection = DNN_b |

Referring to Table 1, in URSP rule number 1 of, the traffic descriptor may include information indicating that the application descriptor (App Descriptor) is AppID1 and the route selection descriptor may include information indicating that a precedence is 1, an S-NSSAI is S-NSSAI-a, an Access Type preference is based on the 3GPP Access, and a DNN is DNN_a. For example, when a network connection request (e.g., requestNetwork) is identified from an application of AppID1, the electronic device 101 may perform at least one operation for establishing a data (or packet) transmission path by using the route selection descriptor of the URSP rule number 1. The data transmission path may include a PDU session, a packet data name (PDN) connection in LTE, or a network slice. Referring to URSP rule numbers 2, 3, and 4 of Table 1, the traffic descriptors may include information indicating that connection capabilities are real time interactive, unified communication traffic, and real time streaming, respectively.

For example, in 3GPP TS 24.526, a traffic descriptor component type identifier may be defined and bits of "1001000" may be defined to indicate a connection capabilities type. The connection capabilities may be associated with various traffic categories (or traffic types). Table 2 shows an example of the traffic categories and may follow a global system for mobile communications association (GSMA) network group (NG) 135. However, Table 2 shows a non-binding example and the present disclosure is not limited in this regard.

**[Table 2]**

| **Traffic Category** | **Description** |
|---|---|
| IMS Voice + Video Comprising Voice | It refers to video telephony and multimedia communication based on Internet protocol (IP) network. It may include a call, a video, a short message service (SMS), and a rich communication service (RCS) through an IP multimedia subsystem (IMS). |
| | (video telephony and multimedia communications over IP networks. Voice, Video and SMS (Short Message Service) over IMS (IP Multimedia Subsystem), as well as RCS (Rich Communication Service), are included in this traffic category.) |
| Internet | Internet: defined for Internet data traffic with wide availability but no critical requirements on latency or data rates. |
| Internet of Things (IoT) and Machine To Machine Type of Traffic | It is characterized by low data rates and requiring low latency occasionally or in scenarios of enterprise/private network environments with reduced geographical scope |
| On Demand Downlink Streaming | It is characterized as downlink high data rates content and low latency, delivered and consumed in a continuous manner from a source, with little or no intermediate storage in network elements. |
| On Demand Uplink Streaming | It is characterized as uplink high data rates content and low latency, send in a continuous manner from a source, with little or no intermediate storage in network elements. |
| Vehicular Communications | It refers to vehicle-to-infrastructure, vehicle-to-network, vehicle-to-vehicle, vehicle-to-pedestrian, vehicle-to-device, vehicle-to-grid, and is characterized by low latency, high reliability and high availability. |
| Real Time Interactive Traffic | It is characterized by bidirectional variable data rates as well as low latency requirements, for example gaming, AR/VR. |
| Unified Communications Traffic | It includes communications through a single service, for example, instant messaging, VoIP, and video collaboration through the same user interface, and is characterized by consistent latency, jitter, and variable data rates. |
| Background Traffic | It includes processes running in the background, for example, firmware/software updates over the air, with no critical requirements from latency or data rates perspective. |
| Location-Based Traffic | It requires highly reliable user and control plane signaling. |

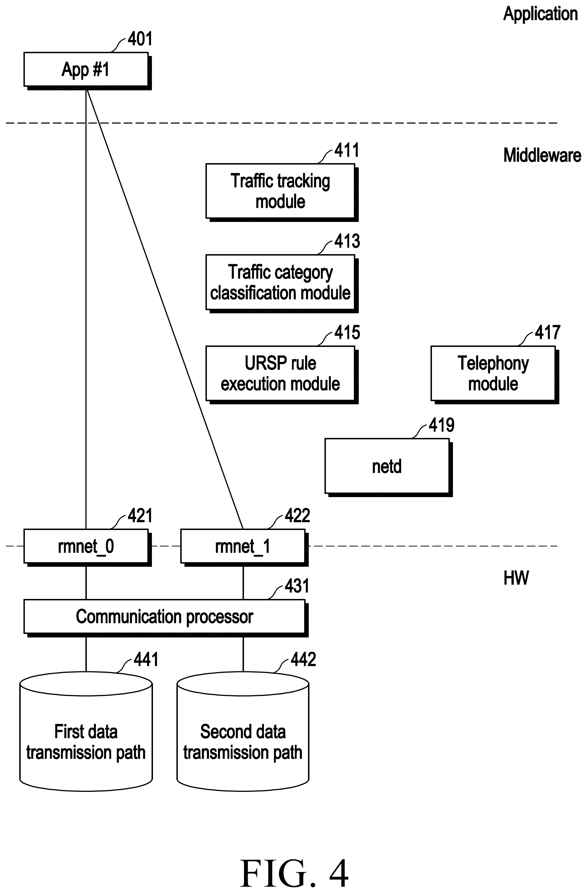

The electronic device 101 may identify that traffic required to be transmitted and/or received is at least one of, for example, the traffic categories shown in Table 2. The electronic device 101 may identify a route selection descriptor corresponding to the traffic category based on the URSP rule. The electronic device 101 may perform at least one operation of allowing data to be transmitted and/or received through a PDU session that is a type of the data transmission paths corresponding to the identified route selection descriptor. Accordingly, traffic of a specific category may be transmitted and/or received through a specific PDU session. For example, the electronic device 101 may establish a PDU session corresponding to real-time streaming in order to transmit and/or receive traffic of real-time streaming. As another example, the electronic device 101 may identify a route selection descriptor (e.g., S-NSSI-b, 3GPP-Accessp, and/or DNN_b) corresponding to real-time streaming with reference to the URSP rule in Table 1. The electronic device 101 may establish a PDU session for the identified route selection descriptor. The electronic device 101 may transmit and/or receive traffic having the category of real-time streaming by using the established PDU Session. According to an embodiment, the electronic device 101 may identify a traffic category, based on a result obtained by inputting data in a data structure including, for example, a plurality of time points and network groups corresponding to the plurality of time points, respectively, into a traffic category classification model, which is described with reference to FIG. 4. The plurality of time points may be a plurality of instantaneous time points or a plurality of time intervals (e.g., ranges or periods), for example.

FIG. 4 is a diagram illustrating operations of entities executed in the electronic device, according to an embodiment.

According to an embodiment, the electronic device 101 may execute a first application 401. The first application 401 may provide a network use request (e.g., NetworkRequest) according to the execution. A telephony module 417 may make a request for establishing a data transmission path to a communication processor 431, based on the network use request and/or the request for the data transmission path (e.g., a PDU session) being made for a specific traffic category. The telephony module 417 may make a request for establishing the data transmission path, identifying the existing data transmission path, and/or ending the existing data transmission path. For example, the telephony module 417 may make a request for establishing the data transmission path to the communication processor 431, based on information on the route selection descriptor provided from a URSP rule execution module 415. The URSP rule execution module 415 may execute, for example, the URSP rule as shown in Table 1. The URSP rule execution module 415 may provide the route selection descriptor corresponding to the traffic descriptor with reference to the executed URSP rule. For example, the URSP rule execution module 415 may identify the route selection descriptor corresponding to the traffic category associated with the first application 401 with reference to the URSP rule and provide the route selection descriptor to the telephony module 417.

A traffic tracking module 411 may identify at least one network parameter provided from the first application 401 (or traffic provided to the first application 401). A plurality of network parameters may be referred to as a network parameter group. The identification of the network parameters may be performed based on, for example, a scheme of a Berkeley packet filter (BPF) and/or operating system (OS) provision statistical information. However, the present disclosure is not limited in this regard. The network parameter group may be identified, for example, for each application, for each IP flow, or for each of a plurality of applications (or each of application groups). The network parameters may include, for example, directly measured parameters and/or parameters calculated based on processing of the directly measured parameters. However, the present disclosure is not limited in this regard. For example, the network parameters may include the number of uplink packets, a log value for the number of uplink packets, the size (and/or the sum) of uplink packets, a log value for the size (and/or the sum) of uplink packets, the number of downlink packets, a log value for the number of downlink packets, the size (and/or the sum) of downlink packets, a log value for the size (and/or the sum) of downlink packets, a degree of an increase or decrease in the number of uplink packets, a degree of an increase or decrease in the size of uplink packets, a degree of an increase or decrease in the number of downlink packets, a degree of an increase or decrease in the size of downlink packets, a result of a comparison between the numbers of uplink and downlink packets, a result of a comparison between the sizes of uplink and downlink packets, a time interval between downlink packets, a time interval between uplink packets, and statistical information (e.g., a minimum value, a maximum value, and/or a sum) of the size of uplink and/or downlink packets. However, the present disclosure is not limited as to the type and/or number of network parameters. The network parameters may be identified to correspond to, for example, timestamps, and, when the network parameters are identified for each application, the network parameters may be identified for each piece of application identification information (e.g., an application name and/or unique identifier (UID)). In an embodiment, the network parameters may include, but not be limited to, a protocol type, a packet transmission time point, a reception time point, and/or information provided by an operating system (OS) (e.g., TrafficStats of Android) as well as the packet characteristic.

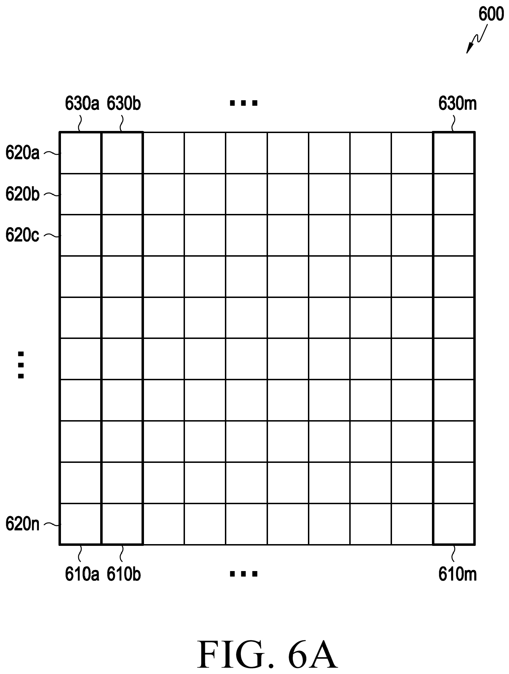

The traffic category classification module 413 may classify traffic categories, based on at least one network parameter provided from the traffic tracking module 411. For example, the traffic category classification module 413 may input data in a data structure including a plurality of time points and network parameter groups corresponding to the plurality of time points, respectively, into a traffic category classification model. The corresponding data structure is described with reference to FIG. 6A. The traffic category classification module 413 may provide a traffic category according to an inference result of the traffic category classification module 413 to the URSP rule execution module 415. The URSP rule execution module 415 may identify a route selection descriptor corresponding to the traffic category as described above. The URSP rule execution module 415 may provide the identified route selection descriptor to the telephony module 417. The network parameter groups may be identified for each application, and accordingly the traffic category classification module 413 may classify traffic categories for each application. When the network parameter groups are identified for each IP flow, the traffic categories may be identified for each IP flow. In an embodiment, the preprocessing and/or postprocessing may be performed by the traffic tracking module 411 and/or the traffic category classification module 413.

For example, when the data transmission path corresponding to the identified route selection descriptor is not established, the telephony module 417 may make a request for establishing the data transmission path corresponding to the identified route selection descriptor to a communication processor 431 (e.g., the first communication processor 212, the second communication processor 214, and/or the unified communication processor 260). The communication processor 431 may transmit a message for establishing the data transmission path based on the identified route selection descriptor, for example, a PDU session establishment request message to the network, based on the request for the data transmission path being made. The network may establish the data transmission path for the electronic device 101 and, for example, allocate (or execute) network slices based on the identified route selection descriptor. The network may transmit a data transmission path establishment completion message to the electronic device 101. The communication processor 431 may inform the telephony module 417 of the establishment of the data transmission path.

As shown in FIG. 4, for example, it may be assumed that the electronic device 101 establishes a first data transmission path 441 and a second data transmission path 442. In an embodiment, the first data transmission path 441 may be used to transmit and/or receive traffic having a first category type among the traffic of the first application 401, and the second data transmission path 442 may be used to transmit and/or receive traffic having a second category type among the traffic of the first application 401. The first data transmission path 441 may correspond to, for example, a first network interface rmnet_0 421, and the second data transmission path 442 may correspond to a second network interface rmnet_1 422. The first application 401 may provide not only traffic in the same category type but also traffic in different category types. For example, Table 3 shows examples of a plurality of category types for the first application 401.

**[Table 3]**

| **Application State** | **Traffic Category** |
|---|---|
| First Application State | Background Traffic |
| Second Application State | On Demand Downlink Streaming |
| Third Application State | Critical Communication |

The electronic device 101 may identify a traffic category by using, for example, a traffic category classification module 413 during, for example, each application state. Accordingly, the electronic device 101 may identify the traffic category in real time and use a data transmission path and/or a network slice corresponding thereto without pre-storage of relevant information shown in Table 3. The electronic device 101 may identify a route selection descriptor corresponding to the identified traffic category, based on the URSP rule. The electronic device 101 may transmit and/or receive traffic during a specific application state through the data transmission path corresponding to the identified route selection descriptor. For example, traffic of the first application 401 during a first period (e.g., during a resource update) may have traffic in a background traffic category type, and traffic of the first application 401 during a second period may have a real-time interactive traffic category. Accordingly, even for one application, different first and second data transmission paths 441 and 442 may need to be used for each time period. The telephony module 417 and/or the URSP rule execution module 415 may control traffic related to the first application 401 to be provided through one of the first data transmission path 441 or the second data transmission path 442, based on, for example, netd 419. For example, when the electronic device 101 determines to use the first data transmission path 441, the electronic device 101 may control traffic provided from the first application 401 to be provided to the communication processor 431 through the first network interface 421 and/or control traffic received through the first network interface 421 to be provided to the first application 401. As another example, when the electronic device 101 determines to use the second data transmission path 442, the electronic device 101 may control traffic provided from the first application 401 to be provided to the communication processor 431 through the second network interface 422 and/or control traffic received through the second network interface 422 to be provided to the first application 401. However, the selective use of the data transmission path through the network interface is only a non-binding example, and the present disclosure is not limited as to a scheme of the selective use of the data transmission path.

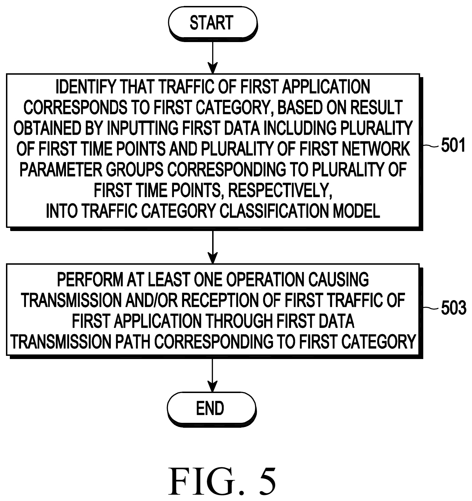

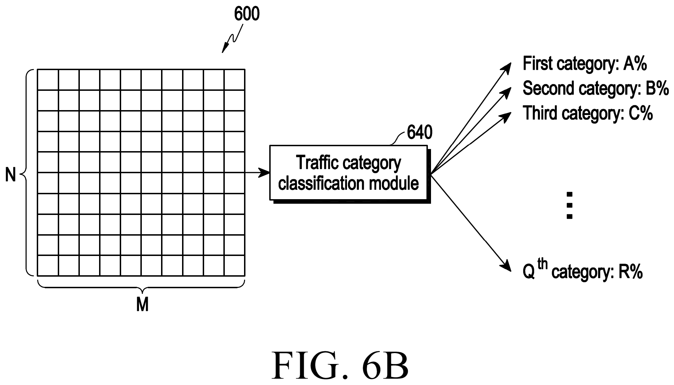

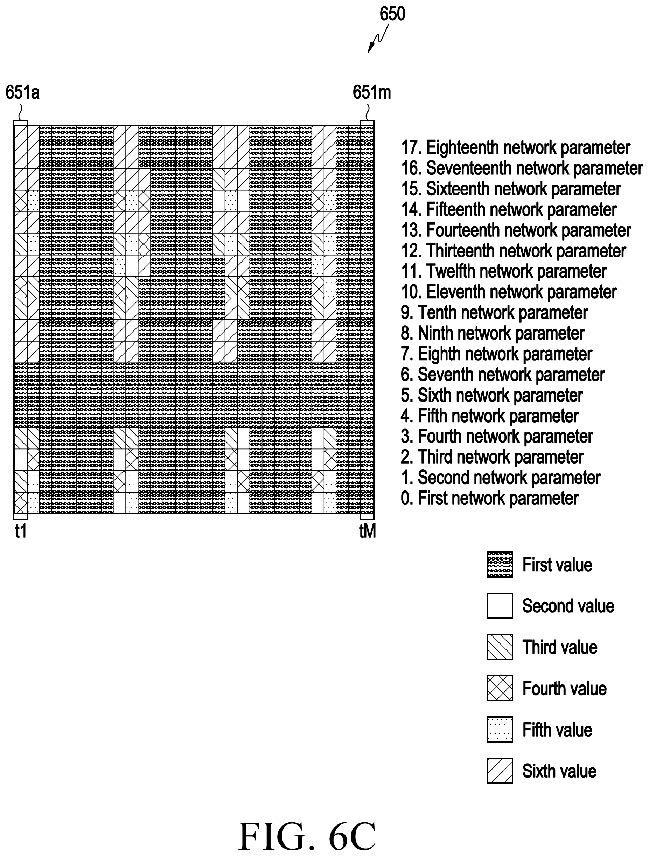

FIG. 5 is a flowchart illustrating a method of operating an electronic device, according to an embodiment. FIG. 5 is described with reference to FIGS. 6A to 6G. FIG. 6A illustrates a data structure of data input into a traffic category classification model, according to an embodiment. FIG. 6B illustrates inference by an artificial intelligence (AI) model, according to an embodiment. FIGS. 6C to 6G illustrate data, according to various embodiments.

According to an embodiment, the electronic device 101 may identify that traffic of the first application corresponds to a first category, based on a result obtained by inputting, into a traffic category classification model 640, first data 600 in a first data structure (e.g., a two-dimensional (2D) structure as shown in FIG. 6A) including a plurality of first time points (e.g. a first time point 610a, a second time point 610b, to an m-th time point 610m, where m is a positive integer greater than or equal to two (2)) and a plurality of first network parameter groups (e.g., a first network parameter group 630a, a second network parameter group 630b, to an m-th network parameter group 630m) corresponding to the plurality of first time points, respectively, in operation 501. Referring to FIG. 6A, for example, a plurality of network parameters (e.g., a first network parameter 620a, a second network parameter 620b, a third network parameter 620c, to an n-th network parameter 620n, where n is a natural number larger than or equal to two (2)) may be identified to correspond to, for example, the first time point 610a. The plurality of network parameters 620a to 620n corresponding to the first time point 610a may be referred to as the first network parameter group 630a corresponding to the first time point 610a. The plurality of network parameters 620ato 620n may include measured parameters and/or parameters identified based on the result of processing of the measured parameters as described above. The plurality of network parameters 620a to 620n may include at least one of the number of uplink packets, a log value for the number of uplink packets, the size (and/or the sum) of uplink packets, a log value for the size (and/or the sum) of uplink packets, the number of downlink packets, a log value for the number of downlink packets, the size (and/or the sum) of downlink packets, a log value for the size (and/or the sum) of downlink packets, a degree of an increase or decrease in the number of uplink packets, a degree of an increase or decrease in the size of uplink packets, a degree of an increase or decrease in the number of downlink packets, a degree of an increase or decrease in size of downlink packets, a result of a comparison between the numbers of uplink and downlink packets, a result of a comparison between the sizes of uplink and downlink packets, a time interval between downlink packets, a time interval between uplink packets, or statistical information (e.g., a minimum value, a maximum value, and/or a sum) of the size of uplink and/or downlink packets. However, the present disclosure is not limited as to the type and/or number of the plurality of network parameters 620a to 620n. For example, the number of uplink packets may be measured for a predetermined period, and accordingly, those skilled in the art may understand that there is no limitation in the first time point 610a as long as it is a value for expressing the corresponding period. In an embodiment, the second to m-th network parameters 630b to 630m corresponding to other time points (e.g., the second to m-th time points 630b to 630m) may also include a plurality of network parameters.

For example, referring to FIG. 6B, the electronic device 101 may input the first data 600 having the first data structure including the plurality of time points 610a to 610m and the plurality of network parameter groups 630a to 630m corresponding to the plurality of first time points, respectively, into the traffic category classification model 640. The first data structure may be expressed as the two (2) dimensions in the example of FIG. 6B. However, the present disclosure is not limited in this regard. For example, the first data structure may also be expressed as three (3) dimensions or higher. According to the 2D data structure, the first data 600 may be referred to as an image. The traffic category classification model 640 may receive an input of data having, for example, the first data structure and may be trained to output a probability for each category. The configuration of the traffic category classification model 640 to output the probability for each category is only an example, and those skilled in the art may understand that the traffic category classification model 640 may be configured to output one category. The traffic category classification model 640 may be and/or may include, for example, a CNN for classifying 2D images. Alternatively or additionally, the traffic category classification model 640 may be and/or may include a DNN, an RNN, an RBM, a DBM, a BRDNN, a deep Q-network, or the like. That is, the present disclosure is not limited in this regard. For example, an artificial intelligence model for classifying 2D images may have a relatively high classification accuracy, and accordingly, the first data 600 in the 2D data structure may be used. The traffic category classification model 640 may be trained according to, for example, a scheme of unsupervised training (e.g., clustering-based training). However, the present disclosure is not limited in this regard. Those skilled in the art may understand that the traffic category classification model 640 may be trained according to a supervised training scheme and/or trained according to a reinforcement training scheme, based on a labeled training data set. In FIG. 6B, the traffic category classification model 640 may output a probability for each category, and the electronic device 101 may identify a traffic category having the highest probability as a traffic category corresponding to the corresponding application. For example, when the highest probability is lower than a threshold probability, the electronic device 101 may select another traffic category, as described with reference to FIG. 6C.

For example, referring to FIG. 6C, data 650 may have a data structure including M time points (e.g., a first time point t1 to M-th time point tM, where M is a positive integer greater than one (1)) and a plurality of network parameter groups (e.g., a first network parameter group 651a to m-th network parameter group 651m) corresponding to the M time points t1 to tM. For example, the first network parameter group 651a may include values of a plurality of network parameters (e.g., a first network parameter to an eighteenth network parameter) corresponding to the first time point t1. The M-th network parameter group 651m may include values of the plurality of network parameters (e.g., the first network parameter to the eighteenth network parameter) corresponding to the M-th time point tM. FIG. 6C illustrates that, for example, the values of the network parameters may have, for example, a first value to a fifth value. However, the present disclosure is not limited in this regard and those skilled in the art may understand that there is no limitation in the number of values. Each value of the network parameters may be expressed in a different pattern in FIG. 6C, however, there is no limitation in the expression method, and the values of the network parameters may be expressed by, for example, contrast, saturation, color, and/or a combination of two or more thereof. The data 650 may be an input value input into the traffic category classification model 640. The number of packets and the size of packets may have different dimensions (and/or units). For example, the data 650 may be implemented to include identified network parameters without separate additional processing. For example, the number of packets and the size of packets may be included in the data 650. For example, the data 650 may be implemented to include network parameters for which additional processing has been performed. For example, the electronic device 101 may generate the data 650, based on a scaling result for the number of packets and a scaling result for the size of packets. However, scaling is only an example of additional processing that may be performed and there is no limitation in the type of additional processing.

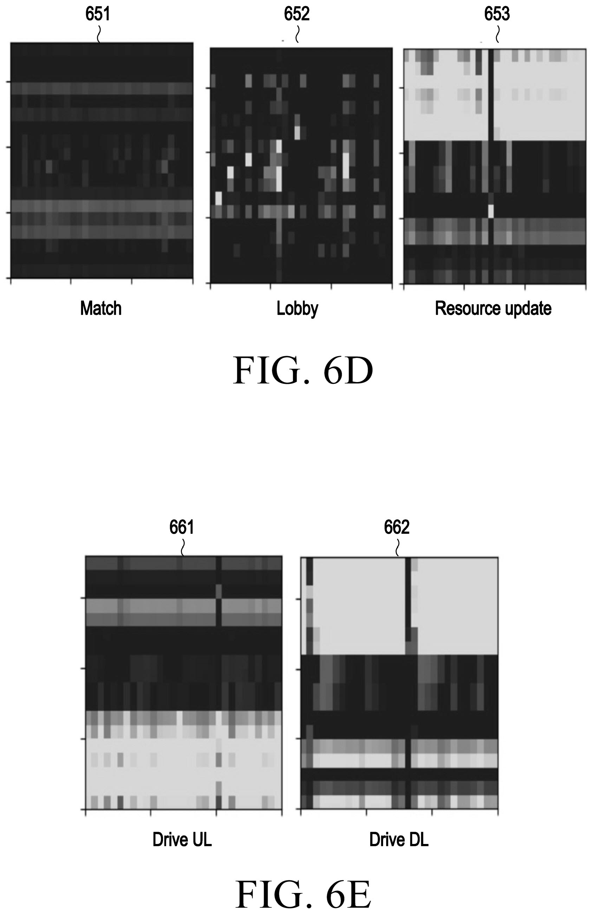

In an embodiment, different traffic categories may be determined for one application according to different application states. Referring to FIG. 6D, examples of match data 651, lobby data 652, and resource update data 653 having 2D data structures for various application states (e.g., match, lobby, and resource update) of a game (e.g., a first-person shooting game) are illustrated. The contrast (or distinct colors) in FIG. 6D may correspond to, for example, the size (large or small) of the value, however there is no limitation. It may be identified that the data 651 to 653 may have different features, and the data 651 to 653 may be classified into different traffic categories according to an inference result of the traffic category classification model 640.

Referring to FIG. 6E, examples of downlink data 661 and uplink data 662 having 2D data structures for various application states (e.g., downlink and uplink) of a cloud service (e.g., web drive) are illustrated. For example, the downlink data 661 and the uplink data 662 may have different features, and the downlink data 661 and the uplink data 662 may be classified into different traffic categories according to an inference result of the traffic category classification model 640.

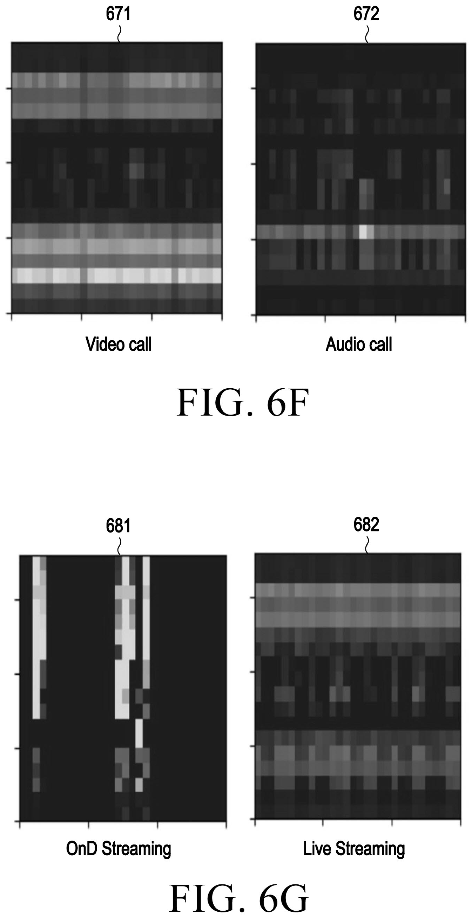

Referring to FIG. 6F, examples of video call data 671 and audio call data 672 having 2D data structures for various application states (e.g., video call and audio call) of a video chatting (e.g., remote meeting application) are illustrated. The video call data 671 and the audio call data 672 have different features, and the video call data 671 and the audio call data 672 may be classified into different traffic categories according to an inference result of the traffic category classification model 640.

Referring to FIG. 6G, examples of on-demand streaming data 681 and real-time live streaming data 682 having 2D data structures for various application states (e.g., on-demand streaming and real-time live streaming) of a streaming application (e.g., over-the-top (OTT) application) are illustrated. The on-demand streaming data 681 and the real-time live streaming data 682 have different features, and the on-demand streaming data 681 and the real-time live streaming data 682 may be classified into different traffic categories according to an inference result of the traffic category classification model 640.

Referring back to FIG. 5, the electronic device 101 may perform at least one operation for transmitting and/or receiving first traffic of the first application through the first data transmission path corresponding to the first category in operation 503. For example, when there is no data transmission path corresponding to the first category, the electronic device 101 may establish the first data transmission path, based on a route selection descriptor corresponding to the first category. That is, the electronic device 101 may define (or generate) a new network interface (e.g., rmnet) and match the new network interface with the newly established first data transmission path. When the first data transmission path based on the route selection descriptor corresponding to the first category already exists, a procedure of establishing the data transmission path may be omitted. The electronic device 101 may control the first traffic of the first application to be transmitted and/or received through the first data transmission path. For example, the electronic device 101 may control uplink traffic provided from the first application to be provided to a network interface corresponding to the first data transmission path, and accordingly, may provide traffic provided through the first network interface through the first data transmission path. Alternatively or additionally, the electronic device 101 may control downlink traffic provided through the first data transmission path and the first network interface to be allocated to the first application. Traffic transmission and/or reception through the data transmission path using the network interface is only an example, and those skilled in the art may understand that a scheme that does not use the network interface is also possible.

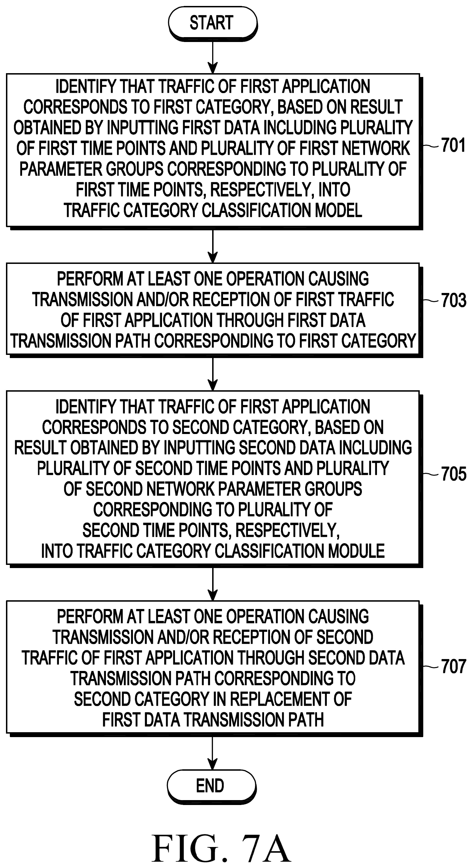

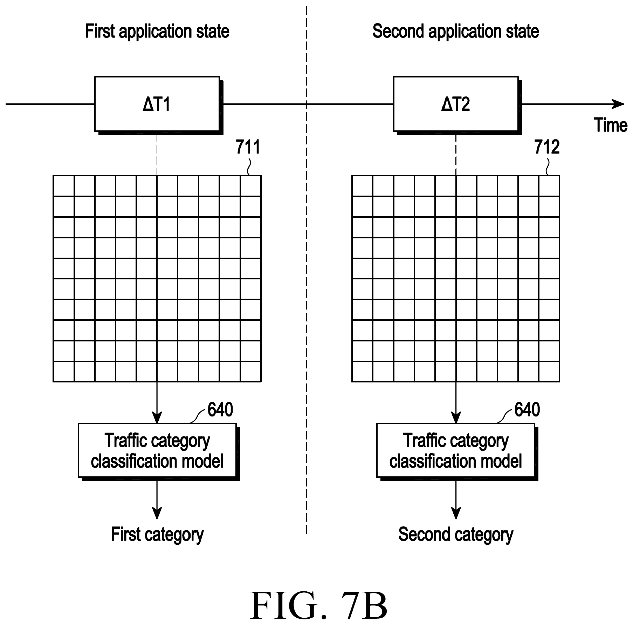

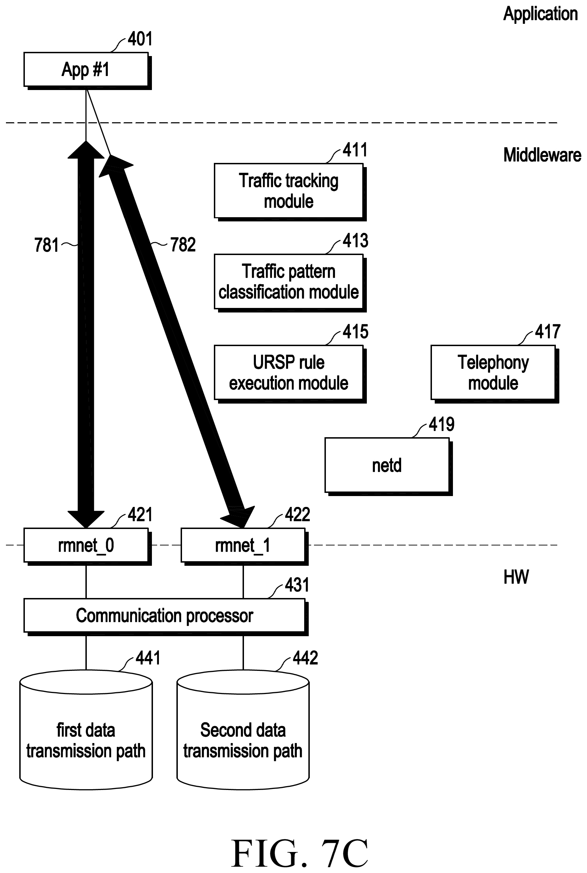

FIG. 7A is a flowchart illustrating a method of operating an electronic device, according to an embodiment. FIG. 7A is described with reference to FIGS. 7B and 7C. FIG. 7B illustrates a category change, according to an embodiment. FIG. 7C illustrates a change in a data transmission path to be used, according to an embodiment.

According to an embodiment, the electronic device 101 may identify that traffic of the first application 401 corresponds to the first category, based on a result obtained by inputting, into the traffic category classification model 640, first data 711 including a plurality of first time points and a plurality of first network groups corresponding to the plurality of first time points, respectively, as illustrated in FIG. 7B, in operation 701. For example, the electronic device 101 may identify the first data 711 during at least some of a first period ΔT1 (or at a time point before the first period ΔT1). The electronic device 101 may identify that traffic of the first application corresponds to the first category, based on an inference result of the first data 711 by the traffic category classification model 640. The electronic device 101 may perform at least one operation for transmitting and/or receiving first traffic 781 of the first application 401 through the first data transmission path 441 corresponding to the first category in operation 703, as illustrated in FIG. 7C. For example, the electronic device 101 may control the first traffic 781 related to the first application 401 to be transmitted/received through the first network interface 421 and the first data transmission path 441. As another example, the electronic device 101 may control uplink traffic from the first application 401 to be provided through the first network interface 421 and/or control downlink traffic from the first network interface 421 to be provided to the first application 401. However, the present disclosure is not limited in this regard.

The electronic device 101 may identify that traffic of the first application 401 corresponds to the second category, based on a result obtained by inputting, into the traffic category classification model 640, second data 712 including a plurality of second time points and a plurality of second network groups corresponding to the plurality of second time points, respectively, as illustrated in FIG. 7B, in operation 705. For example, the electronic device 101 may identify the second data 712 during at least some of a second period ΔT2 (or at a time point before the second period ΔT2). The electronic device 101 may identify that traffic of the first application corresponds to the first category, based on an inference result of the second data 712 by the traffic category classification model 640. An application state during the first period ΔT1 and an application state during the second period ΔT2 may be different, and accordingly, traffic categories may be differently classified. The electronic device 101 may perform at least one operation for transmitting and/or receiving second traffic 782 of the first application 401 through the second data transmission path 442 corresponding to the second category in operation 707, as illustrated in FIG. 7C. For example, the electronic device 101 may control the second traffic 782 related to the first application 401 to be transmitted/received through the second network interface 422 and the second data transmission path 442. As another example, the electronic device 101 may control uplink traffic from the first application 401 to be provided through the second network interface 422 and/or control downlink traffic from the second network interface 422 to be provided to the first application 401. However, the present disclosure is not limited in this regard.

When the electronic device 101 identifies that there is no second data transmission path 442, those skilled in the art may understand that the electronic device 101 may establish the second data transmission path 442. In an embodiment, according to the elapse of time, traffic of the first application 401 may have a different category. The electronic device 101 may identify in real time a change in the category of the traffic of the first application 401 through the traffic category classification model 640 and make a data transmission path change (or network slice change) corresponding thereto.

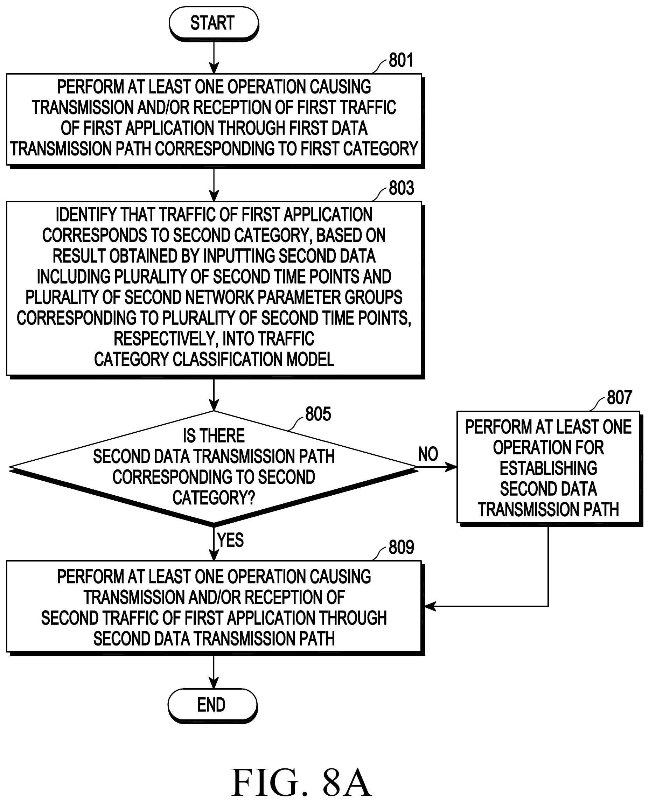

FIG. 8A is a flowchart illustrating a method of operating an electronic device, according to an embodiment.

According to an embodiment, the electronic device 101 may perform at least one operation for transmitting and/or receiving first traffic of the first application through the first data transmission path corresponding to the first category in operation 801. For example, the electronic device 101 may identify that traffic of the first application corresponds to the first category and control the first traffic of the first application to be transmitted and/or received through the first data transmission path. The electronic device 101 may identify that traffic of the first application corresponds to the second category, based on a result obtained by inputting second data including a plurality of second time points and a plurality of second network parameter groups corresponding to the plurality of second time points, respectively, into the traffic category classification model 640, in operation 803. As described with reference to FIG. 7B, according to the change in the application state of the first application, the traffic category may be changed. The electronic device 101 may identify whether there is the second data transmission path corresponding to the second category in operation 805. For example, the electronic device 101 may identify a route selection descriptor corresponding to a traffic descriptor of the second category, based on the URSP rule. The electronic device 101 may identify whether there is a data transmission path corresponding to the identified route selection descriptor. When the electronic device 101 identifies that there is no second data transmission path corresponding to the second category (NO in operation 805), the electronic device 101 may perform at least one operation for establishing the second data transmission path in operation 807. For example, the electronic device 101 may transmit a second data transmission path establishment request message based on the route selection descriptor corresponding to the traffic descriptor of the second category to the network. The electronic device 101 may define (or generate) a new network interface for the established second data transmission path. The electronic device 101 may match (or map) the new network interface with (to) the second data transmission path. When the electronic device 101 identifies that there is the second data transmission path corresponding to the second category (YES in operation 805), the electronic device 101 may perform at least one operation for transmitting and/or receiving second traffic of the first application through the second data transmission path in operation 809.

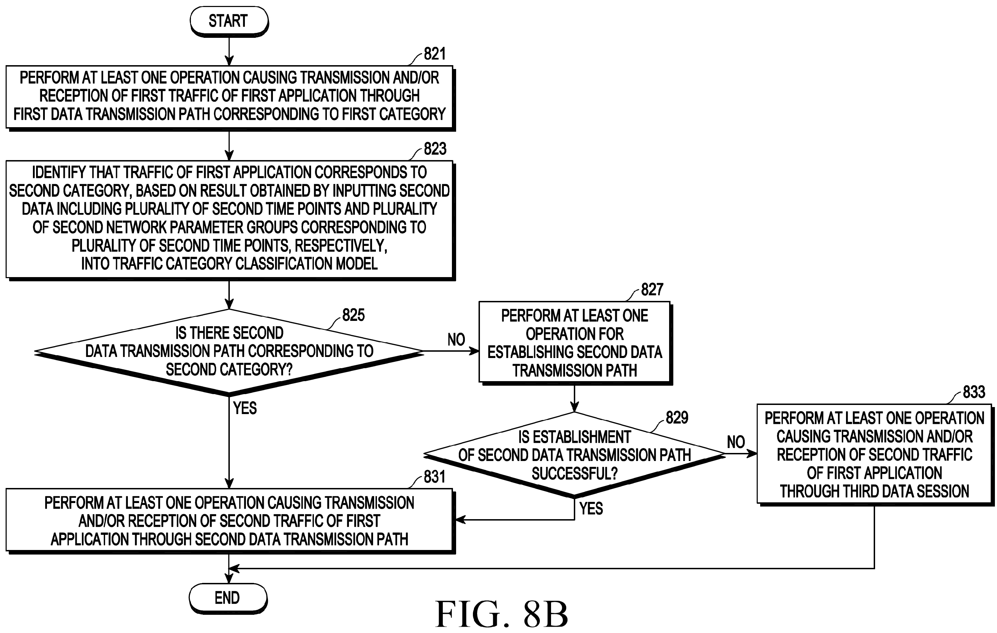

FIG. 8B is a flowchart illustrating a method of operating an electronic device, according to an embodiment.

According to an embodiment, the electronic device 101 may perform at least one operation for transmitting and/or receiving first traffic of the first application through the first data transmission path corresponding to the first category in operation 821. For example, the electronic device 101 may identify that traffic of the first application corresponds to the first category and control the first traffic of the first application to be transmitted and/or received through the first data transmission path. The electronic device 101 may identify that traffic of the first application corresponds to the second category, based on a result obtained by inputting second data including a plurality of second time points and a plurality of second network groups corresponding to the plurality of second time points, respectively, into the traffic category classification model 640, in operation 823. The electronic device 101 may identify whether there is the second data transmission path corresponding to the second category in operation 825. When the electronic device 101 identifies that there is no second data transmission path corresponding to the second category (NO in operation 825), the electronic device 101 may perform at least one operation for establishing the second data transmission path in operation 827.

The electronic device 101 may identify whether the establishment of the second data transmission path is successful in operation 829. When the electronic device 101 identifies that the establishment of the second data transmission path is successful (YES in operation 829), the electronic device 101 may perform at least one operation for transmitting and/or receiving the second traffic of the first application through the second data transmission path in operation 831. Alternatively or additionally, when the electronic device 101 identifies that there is the second data transmission path corresponding to the second category in operation 825 (YES in operation 825), the electronic device 101 may perform at least one operation for transmitting and/or receiving the second traffic of the first application through the second data transmission path, in operation 831. When the electronic device 101 identifies that the establishment of the second data transmission path is not successful (NO in operation 829), the electronic device 101 may perform at least one operation for transmitting and/or receiving the second traffic of the first application through a third data transmission path in operation 833. For example, the third data transmission path may be a predetermined (or default) data transmission path that may be used for general purposes. For example, the third data transmission path may be a data transmission path corresponding to a category having similarity with the second category that is larger than or equal to threshold similarity. For example, the third data transmission path may be a data transmission path having a history of the use for transmission/reception of the second traffic.

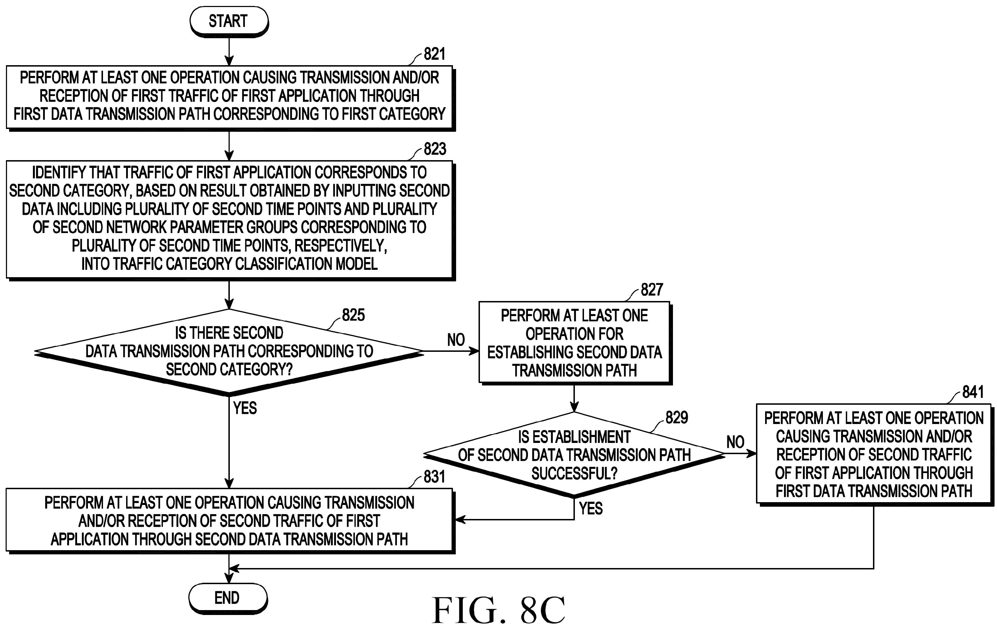

Alternatively or additionally, when the electronic device 101 identifies that the establishment of the second data transmission path is not successful (NO in operation 829), the electronic device 101 may be configured to perform at least one operation for transmitting/receiving the second traffic of the first application through the first data transmission path in operation 841, as shown in FIG. 8C. The electronic device 101 may maintain the use of the existing first data transmission path, based on failure of the establishment of the second data transmission path.

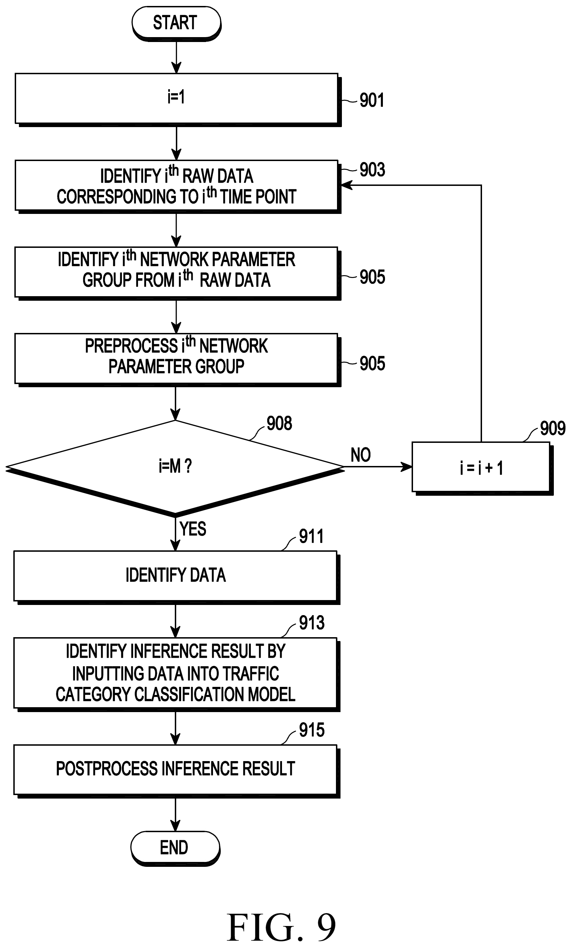

FIG. 9 is a flowchart illustrating a method of operating an electronic device, according to an embodiment.

According to an embodiment, the electronic device 101 may set i as a parameter indicating a time point equal to one (1), in operation 901. The electronic device 101 may identify first raw data corresponding to i=1, that is, a first time point in operation 903. For example, raw data may be data used to configure network parameters and/or calculate network parameters. The electronic device 101 may identify a first network parameter group from the first raw data in operation 905. For example, the electronic device 101 may preprocess the first network parameter group in operation 907. For example, the electronic device 101 may perform scaling for the first raw data as the preprocessing. The scaling may be performed by, for example, a MinMax Scaler, a Robust Scaler, or the like. However, the present disclosure is not limited in this regard. The electronic device 101 may perform clipping for the first raw data as the preprocessing. As the clipping is performed, a data value outside a predetermined range may be adjusted to be within the predetermined range. The scaling and the clipping are examples of the preprocessing, and the present disclosure is not limited in the type and/or number thereof. The electronic device 101 may identify whether i that is the parameter indicating the time point is equal to M, which may be configured as the number of time points of the data structure. When i is less than M (NO in operation 908), the electronic device 101 may increase i by one (1) in operation 909. The electronic device 101 may also preprocess raw data for the second time point to raw data for the M-th time point. The preprocessing for the raw data for each time point is an example, and those skilled in the art may understand that the electronic device 101 may be implemented to perform the preprocessing after collecting all pieces of raw data for the first time point to the M-th time point.

When i is equal to M (or i is larger than or equal to M) (YES in operation 908-Yes), the electronic device 101 may identify data corresponding to M time points in operation 911. The electronic device 101 may identify an inference result by inputting data into the traffic category classification model 640 in operation 913. The electronic device 101 may postprocess the inference result in operation 915. For example, the electronic device 101 may identify a probability for each traffic category as the inference result. The electronic device 101 may identify whether the highest probability is higher than or equal to a threshold probability as the postprocessing. When the highest probability is lower than the threshold probability, the electronic device 101 may identify that the traffic category may not be classified. In such a case, the electronic device 101 may use a predetermined data transmission path that may be used for general purposes, a data transmission path corresponding to a category having similarity with the second category that is higher than or equal to threshold similarity, a data transmission path having a history of the use for transmission/reception of second traffic, or the used existing data transmission path. However, the present disclosure is not limited in this regard.

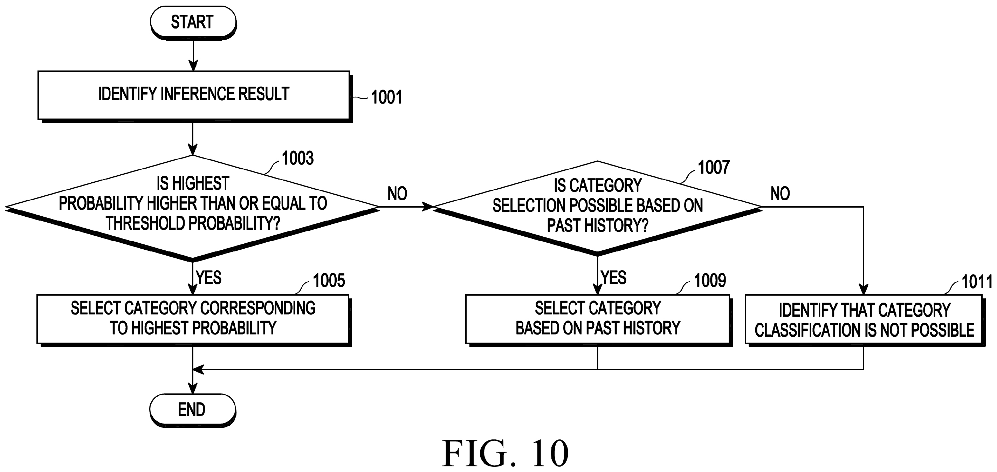

FIG. 10 is a flowchart illustrating a method of operating an electronic device, according to an embodiment.

According to an embodiment, the electronic device 101 may identify an inference result by inputting data into a traffic category classification model 640 in operation 1001. The inference result may include, for example, a probability for each of a plurality of traffic categories. The electronic device 101 may identify whether the highest probability is higher than or equal to threshold probability among the probabilities for each of a plurality of traffic categories in operation 1003. When the electronic device 101 identifies that the highest probability of the probabilities for each of a plurality of traffic categories is higher than or equal to the threshold probability (YES in operation 1003), the electronic device 101 may select a category corresponding to the highest probability in operation 1005. The electronic device 101 may perform at least one operation for transmitting/receiving traffic through a data transmission path corresponding to the selected category. When the electronic device 101 identifies that the highest probability of the probabilities for each of a plurality of traffic categories is not higher than or equal to the threshold probability (NO in operation 1003), the electronic device 101 may identify whether the category may be selected based on a past history in operation 1007. For example, the electronic device 101 may identify whether the category may be selected based on, for example, a past history of the first application. However, the present disclosure is not limited in this regard. When the electronic device 101 identifies that the category may be selected based on the past history (YES operation 1007), the electronic device 101 may select the category based on the past history in operation 1009. For example, the electronic device 101 may select one of at least one category selected for the corresponding application. When the electronic device 101 identifies that the category may not be selected based on the past history (NO in operation 1007), the electronic device 101 may identify that the category may not be classified in operation 1011. In such a case, the electronic device 101 may use a predetermined data transmission path that may be used for general purposes, a data transmission path corresponding to a category having similarity with the second category higher than or equal to predetermined similarity, or the used existing data transmission path regardless of an inference result. However, the present disclosure is not limited in this regard.

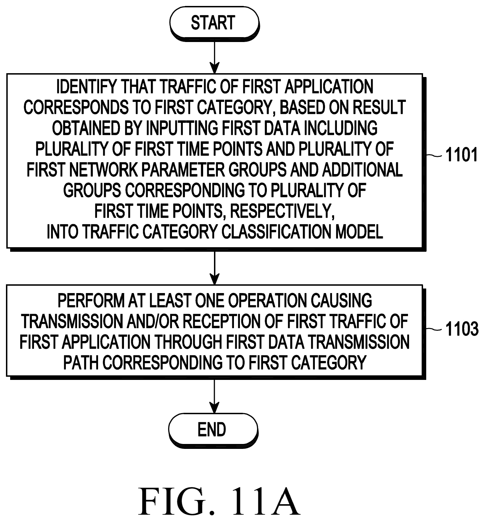

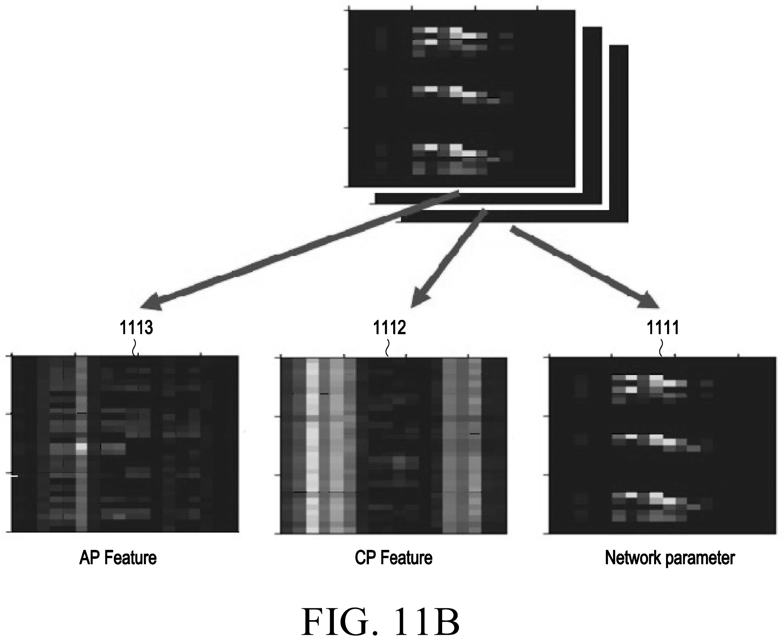

FIG. 11A is a flowchart illustrating a method of operating an electronic device, according to an embodiment. FIG. 11A is described with reference to FIG. 11B. FIG. 11B illustrates additional groups, according to an embodiment.

According to an embodiment, the electronic device 101 may identify that traffic of the first application corresponds to a first category, based on a result obtained by inputting first data having a data structure including a plurality of first time points and a plurality of first network parameter groups and additional groups corresponding to the plurality of first time points, respectively, into a traffic category classification model 640, in operation 1101. For example, referring to FIG. 11B, the electronic device 101 may identify, for example, network parameter groups 1111 corresponding to the plurality of first time points. The electronic device 101 may identify, for example, CP feature groups 1112 that correspond to the plurality of first time points and are measured by a communication processor. The features measured by the communication processor may include, for example, at least one of information related to an electric field (e.g., received signal strength indicator (RSSI), reference signal received power (RSRP), reference signal received quality (RSRQ), channel quality index (CQI), signal to interference plus noise ratio (SINR), or the like), a radio access technology (RAT), channel information, service operator information, or the like. However, the present disclosure is not limited in this regard. The electronic device 101 may identify, for example, AP feature groups 1113 that may correspond to the plurality of first time points and may be measured by an application processor. The features measured by the application processor may include, but not be limited to, for example, a CPU clock, a memory usage, user usage information (e.g., frequency of touch screen operation, whether the screen is turned on/off, and/or executed application information), and/or sensing information (e.g., temperature). The electronic device 101 may input network parameter groups and additional information groups (e.g., CP feature groups 1112 and AP feature groups 1113) into the traffic category classification model 640. For example, the network parameter groups and the additional information groups may correspond to a plurality of time points, in which case input data may have a three-dimensional (3D) data structure or a higher data structure. Alternatively or additionally, the network parameter groups and the additional information groups may be concatenated and correspond to a plurality of time points, in which case input data may have a 2D data structure. However, the present disclosure is not limited as to the data structure. The electronic device 101 may perform at least one operation for transmitting and/or receiving first traffic of the first application through the first data transmission path corresponding to the first category in operation 1103.

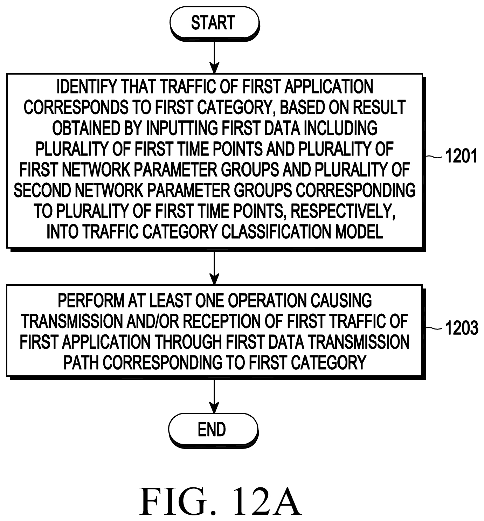

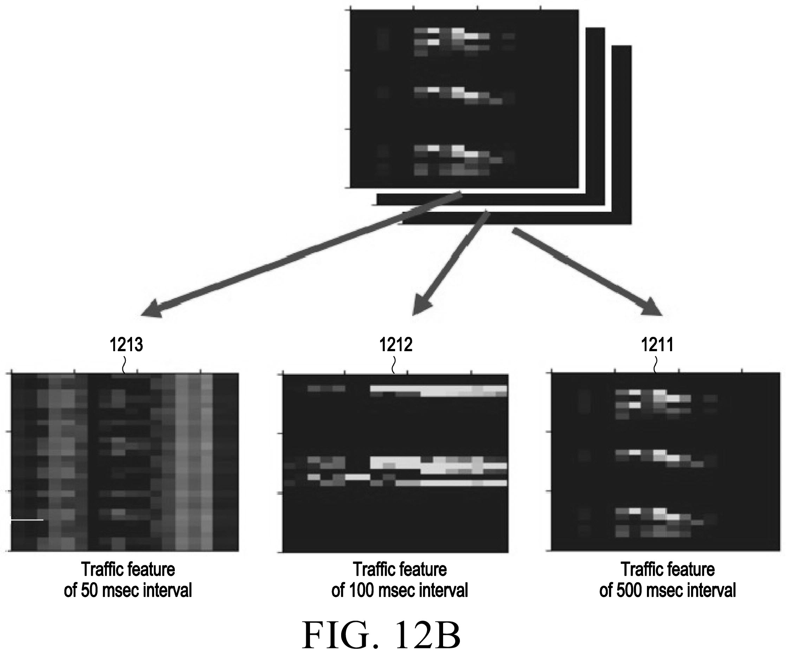

FIG. 12A is a flowchart illustrating a method of operating an electronic device, according to an embodiment. FIG. 12A is described with reference to FIG. 12B. FIG. 12B illustrates data for each time interval, according to an embodiment.

According to an embodiment, the electronic device 101 may identify that traffic of the first application corresponds to a first category, based on a result obtained by inputting first data having a data structure including a plurality of first time points, and a plurality of first network parameter groups and a plurality of second network parameter groups corresponding to the plurality of first time points, respectively, into a traffic category classification model 640 in operation 1201. For example, referring to FIG. 12B, the electronic device 101 may identify, for example, first network parameter groups 1211 corresponding to the plurality of first time points. A time interval between the time points of the first network parameter groups 1211 corresponding to the plurality of first time points may have a first value (e.g., 500 milliseconds (ms)). A time interval between the time points of the second network parameter groups 1212 may have a second value (e.g., 100 ms). A time interval between the time points of the third network parameter groups 1213 may have a third value (e.g., 50 ms). In an embodiment, the electronic device 101 may acquire first traffic feature data 1211, second traffic feature 1212, and third traffic feature 1213 by differently configuring the time intervals between the network parameters. The electronic device 101 may input two (2) or more pieces of the first to third traffic feature data 1211 to 1213 into the traffic category classification model 640. The two (2) or more pieces of the first to third traffic feature data 1211 to 1213 may correspond to a plurality of time points, in which case input data may have a 3D data structure or a higher data structure. Alternatively or additionally, the two (2) or more pieces of the first to third traffic feature data 1211 to 1213 may be concatenated and correspond to a plurality of time points, in which case input data may have a 2D data structure. That is, the present disclosure is not limited as to the data structure. The electronic device 101 may perform at least one operation for transmitting and/or receiving first traffic of the first application through the first data transmission path corresponding to the first category in operation 1203.

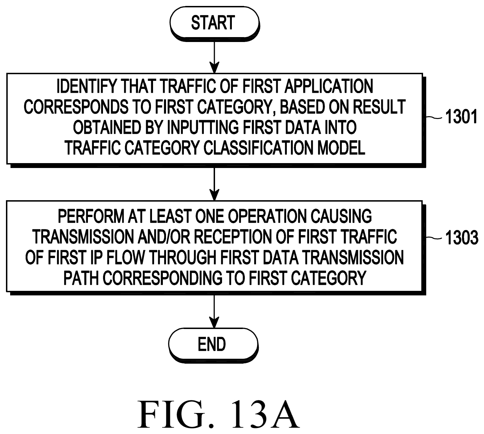

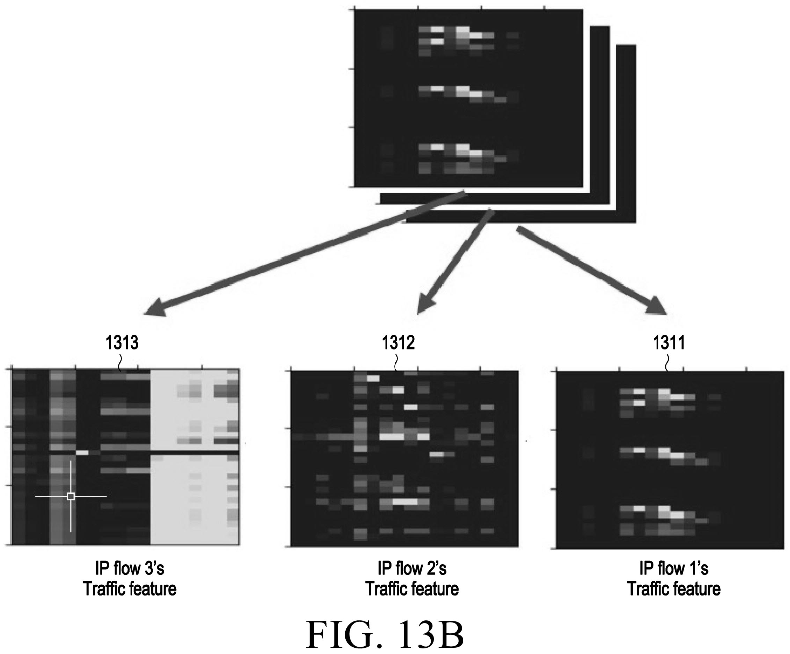

FIG. 13A is a flowchart illustrating a method of operating an electronic device, according to an embodiment. FIG. 13A is described with reference to FIG. 13B. FIG. 13B illustrates data for each IP flow, according to an embodiment.

According to an embodiment, the electronic device 101 may identify that traffic of the first application corresponds to a first category, based on a result obtained by inputting first data having a first data structure including a plurality of first time points and a plurality of first network parameter groups related to a first IP flow and corresponding to the plurality of first time points, respectively, into a traffic category classification model 640 in operation 1301. For example, a plurality of IP flows may correspond to one application. Referring to FIG. 13B, the electronic device 101 may identify that first IP flow traffic feature data 1311, second IP flow traffic feature 1312, and third IP flow traffic feature 1313 for each of a plurality of IP flows corresponding to one application have different shapes (or patterns). Accordingly, a different category may be identified for each of a plurality of IP flows. The electronic device 101 may perform at least one operation for transmitting and/or receiving first traffic of the first IP flow through a first data transmission path corresponding to the first category in operation 1303. Therefore, traffic of the plurality of IP flows corresponding to one application may be transmitted/received through different data transmission paths.

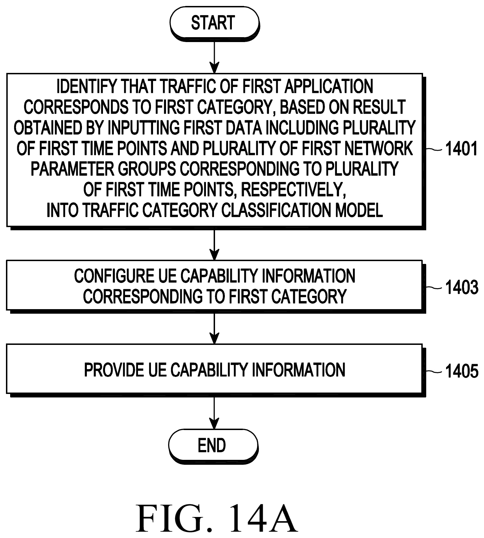

FIG. 14A is a flowchart illustrating a method of operating an electronic device, according to an embodiment.

According to an embodiment, the electronic device 101 may identify that traffic of the first application corresponds to the first category, based on a result obtained by inputting first data including a plurality of first time points and a plurality of first network groups corresponding to the plurality of first time points, respectively, into the traffic category classification model 640 in operation 1401. In operation 1403, the electronic device 101 may configure UE capability information corresponding to the first category. For example, the UE capability information may include UEAssistanceInformation. An information element (IE) of UEAssistanceInformation may include, but not be limited to, for example, at least one of maxCC-Preference, maxBW-Preference, OverheatingAssistance, or the like. The electronic device 101 may configure at least one IE of the UE capability information, based on a traffic category. The electronic device 101 may provide the UE capability information to the network in operation 1405. For example, when the traffic category is related to relatively large-capacity transmission/reception (e.g., on demand downlink streaming), the electronic device 101 may configure UE capabilities of a relatively large component carrier(CC) and a relatively wide bandwidth. However, the present disclosure is not limited in this regard.

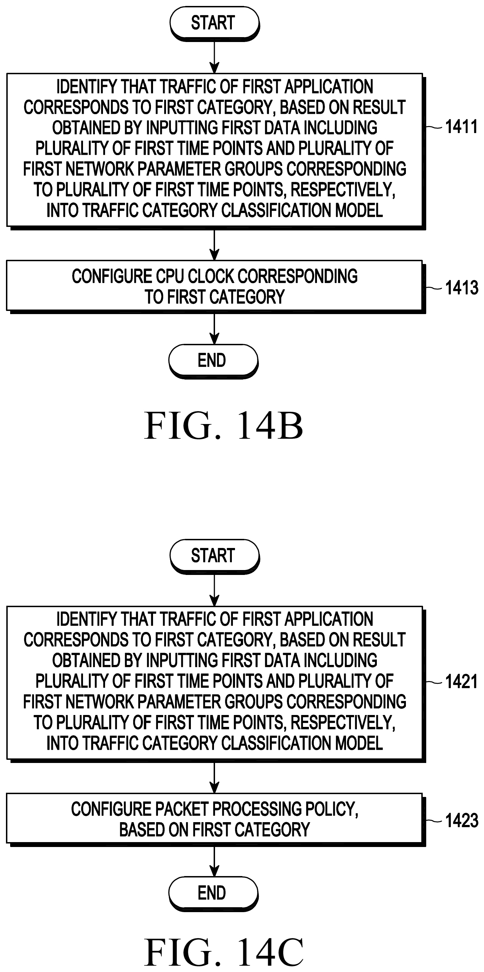

FIG. 14B is a flowchart illustrating a method of operating an electronic device, according to an embodiment.

According to an embodiment, the electronic device 101 may identify that traffic of the first application corresponds to the first category, based on a result obtained by inputting first data including a plurality of first time points and a plurality of first network groups corresponding to the plurality of first time points, respectively, into the traffic category classification model 640 in operation 1411. The electronic device 101 may configure a CPU clock corresponding to the first category in operation 1413. For example, when the traffic category is related to a relatively large capacity transmission/reception (e.g., on demand downlink streaming), the electronic device 101 may configure the CPU clock to be relatively large UE. However, the present disclosure is not limited in this regard.

FIG. 14C is a flowchart illustrating a method of operating an electronic device, according to an embodiment.

According to an embodiment, the electronic device 101 may identify that traffic of the first application corresponds to the first category, based on a result obtained by inputting first data including a plurality of first time points and a plurality of first network groups corresponding to the plurality of first time points, respectively, into the traffic category classification model 640 in operation 1421. The electronic device 101 may configure a packet processing policy, based on the first category in operation 1423. For example, the packet processing policy may include a packet processing priority. As another example, a processing priority of a packet corresponding to a traffic category of real time interactive traffic may be configured to be higher than a processing priority of a packet corresponding to a traffic category of background traffic. However, the present disclosure is not limited in this regard.

According to an embodiment, the electronic device 101 may store the memory 130 configured to store instructions. The electronic device 101 may include at least one processor (e.g., the processor 120, the first communication processor 212, the second communication processor 214, the unified communication processor 260, or the communication processor 431). The instructions may cause, when individually or collectively executed by the at least one processor, the electronic device 101 to, based on result of inputting, into a traffic category classification model 640, first data associated with a traffic of a first application in a fist data structure including a plurality of first time points and a plurality of first network parameter groups respectively corresponding to the plurality of first time points, identify that the traffic of the first application corresponds to a first category. The instructions may cause, when executed by at least the part of the at least one processor, the electronic device 101 to perform at least one operation causing transmission and/or reception of a first traffic of the first application through a first data transmission path corresponding to the first category.

According to an embodiment, the instructions may cause, when executed by at least the part of the at least one processor (e.g., the processor 120, the first communication processor 212, the second communication processor 214, the unified communication processor 260, or the communication processor 431), the electronic device 101 to, based on result of inputting, to the traffic category classification model 640, second data associated with a traffic of the first application in a second data structure including a plurality of second time points which is different from the plurality of first time points and a plurality of second network parameter group respectively corresponding to the plurality of second time points, identify that the traffic of the first application corresponds to a second category which is different from the first category. The instructions may cause, when executed by at least the part of the at least one processor, the electronic device 101 to perform at least one operation causing transmission and/or reception of a second traffic of the first application through a second data transmission path corresponding to the second category, in replacement of the first data transmission path.

According to an embodiment, the instructions may cause, when executed by at least the part of the at least one processor (e.g., the processor 120, the first communication processor 212, the second communication processor 214, the unified communication processor 260, or the communication processor 431), the electronic device 101 to, as at least a part of operations of performing the at least one operation causing transmission and/or reception of the second traffic of the first application through the second data transmission path corresponding to the second category, perform at least one operation for establishing the second data transmission path, based on identifying that a data transmission path corresponding to the second category does not exist.

According to an embodiment, the instructions may cause, when executed by at least the part of the at least one processor (e.g., the processor 120, the first communication processor 212, the second communication processor 214, the unified communication processor 260, or the communication processor 431), the electronic device 101 to, as at a least part of operations of performing the at least one operation causing transmission and/or reception of the second traffic of the first application through the second data transmission path corresponding to the second category, perform at least one operation for associating the second traffic of the first application with the second data transmission path, based on identifying that a data transmission path corresponding to the second category exists.

According to an embodiment, the instructions may cause, as at least the part of operations of performing at least one operation for associating the second traffic of the first application with the second data transmission path, performance of at least one operation for associating the second traffic of the first application with a network interface corresponding to the second data transmission path, based on identifying that the second data transmission path corresponding to the second category exists.

According to an embodiment, the instructions may cause, when executed by at least the part of the at least one processor (e.g., the processor 120, the first communication processor 212, the second communication processor 214, the unified communication processor 260, or the communication processor 431), the electronic device 101 to identify a first route selection descriptor corresponding to the first category by referring URSP rule. The instructions may cause, when executed by at least the part of the at least one processor, the electronic device 101 to perform at least one operation for establishing the first data transmission path corresponding to the first route selection descriptor.

According to an embodiment, each of the plurality of first network parameter groups may include at least one parameter identified based on the number of uplink packets, a log value of the number of uplink packets, the size of uplink packets, a log value of the size of uplink packets, the number of downlink packets, a log value of the number of downlink packets, the size of downlink packets, a log value of the size of downlink packets, a time gap between uplink packets, and/or a gap between downlink packets.

According to an embodiment, each of the plurality of first network parameter groups may include at least one parameter identified based on comparison result between information associated with uplink and information associated with downlink.

According to an embodiment, each of the plurality of first network parameter groups may include at least one parameter identified based on a degree of an increase or decrease in information associated with uplink and/or a degree of an increase or decrease in information associated with downlink.

According to an embodiment, the instructions may cause, when executed by at least the part of the at least one processor (e.g., the processor 120, the first communication processor 212, the second communication processor 214, the unified communication processor 260, or the communication processor 431), the electronic device 101 to perform scaling so that each of the plurality of first network parameter groups has a scaled value.

According to an embodiment, the instructions may cause, when executed by at least the part of the at least one processor (e.g., the processor 120, the first communication processor 212, the second communication processor 214, the unified communication processor 260, or the communication processor 431), the electronic device 101 to perform a clipping operation so that the scaled result is included in a designated range.

According to an embodiment, the instructions may cause, when executed by at least the part of the at least one processor (e.g., the processor 120, the first communication processor 212, the second communication processor 214, the unified communication processor 260, or the communication processor 431), the electronic device 101 to, as at least a part of an operation of identifying that the traffic of the first application corresponds to the first category, identify that the traffic of the first application corresponds to the first category, based on inference result for the first category of the traffic category classification model 640 being larger than or equal to a designated threshold.

According to an embodiment, the instructions may cause, when executed by at least the part of the at least one processor (e.g., the processor 120, the first communication processor 212, the second communication processor 214, the unified communication processor 260, or the communication processor 431), the electronic device 101 to, based on inference result for the first category of the traffic category classification model 640 being smaller than a designated threshold, identify that the traffic of the first application corresponds to the first category, based on a history of the traffic of the first application transmitted and/or received through the first data transmission path.

According to an embodiment, the first data may further include additional groups respectively corresponding to the plurality of first time points.

According to an embodiment, the first data may further include a plurality of second network parameter groups respectively corresponding to the plurality of first time points which are different from the plurality of first network parameter groups.

According to an embodiment, a computer-readable storage medium storing instructions may be provided. The instructions may cause, when individually or collectively executed by the at least one processor (e.g., the processor 120, the first communication processor 212, the second communication processor 214, the unified communication processor 260, or the communication processor 431), the electronic device 101 to perform at least one operation. The at least one operation may include an operation of, based on result of inputting, into a traffic category classification model 640, first data associated with a traffic of a first application in a fist data structure including a plurality of first time points and a plurality of first network parameter groups respectively corresponding to the plurality of first time points, identifying that the traffic of the first application corresponds to a first category. The at least one operation may include an operation of performing at least one operation causing transmission and/or reception of a first traffic of the first application through a first data transmission path corresponding to the first category.

According to an embodiment, the at least one operation may include an operation of, based on result of inputting, to the traffic category classification model 640, second data associated with a traffic of the first application in a second data structure including a plurality of second time points which is different from the plurality of first time points and a plurality of second network parameter groups respectively corresponding to the plurality of second time points, identifying that the traffic of the first application corresponds to a second category which is different from the first category. The at least one operation may include an operation of performing at least one operation causing transmission and/or reception of a second traffic of the first application through a second data transmission path corresponding to the second category, in replacement of the second data transmission path.

According to an embodiment, the operation of performing the at least one operation causing the transmission and/or reception of the second traffic of the first application through the second data transmission path corresponding to the second category may include an operation of performing at least one operation for establishing the second data transmission path, based on identifying that a data transmission path corresponding to the second category does not exist.

According to an embodiment, the operation of performing the at least one operation causing the transmission and/or reception of the second traffic of the first application through the second data transmission path corresponding to the second category may include an operation of performing at least one operation for associating the second traffic of the first application with the second data transmission path, based on identifying that a data transmission path corresponding to the second category exists.

According to an embodiment, the operation of performing the at least one operation for associating the second traffic of the first application with the second data transmission path may include an operation of performing at least one operation for associating the second traffic of the first application with a network interface corresponding to the second data transmission path, based on identifying that a data transmission path corresponding to the second category exists.

According to an embodiment, the at least one operation may include an operation of identifying a first route selection descriptor corresponding to the first category with reference to a URSP rule. The at least one operation may include an operation of performing at least one operation for establishing the first data transmission path corresponding to the first route selection descriptor.

According to an embodiment, each of the plurality of first network parameter groups may include at least one parameter identified based on the number of uplink packets, a log value of the number of uplink packets, the size of uplink packets, a log value of the size of uplink packets, the number of downlink packets, a log value of the number of downlink packets, the size of downlink packets, a log value of the size of downlink packets, a time gap between uplink packets, and/or a gap between downlink packets.

According to an embodiment, each of the plurality of first network parameter groups may include at least one parameter identified based on comparison result between information associated with uplink and information associated with downlink.

According to an embodiment, each of the plurality of first network parameter groups may include at least one parameter identified based on a degree of an increase or decrease in information associated with uplink and/or a degree of an increase or decrease in information associated with downlink.

According to an embodiment, the at least one operation may include an operation of performing scaling so that each of the plurality of first network parameter groups has a scaled value.

According to an embodiment, the at least one operation may include an operation of performing a clipping operation so that scaled result is included in a designated range.

According to an embodiment, the operation of identifying that the traffic of the first application corresponds to the first category may include an operation of identifying that the traffic of the first application corresponds to the first category, based on inference result for the first category of the traffic category classification model 640 being larger than or equal to a designated threshold.

According to an embodiment, the at least one operation may include an operation of, based on inference result for the first category of the traffic category classification model 640 being smaller than a designated threshold, identifying that the traffic of the first application corresponds to the first category, based on a history of the traffic of the first application transmitted and/or received through the first data transmission path.

According to an embodiment, the first data may further include additional groups respectively corresponding to the plurality of first time points.

According to an embodiment, the first data may further include a plurality of second network parameter groups respectively corresponding to the plurality of first time points which are different from the plurality of first network parameter groups.

According to an embodiment, a method of operating an electronic device 101 may include an operation of, based on result of inputting, into a traffic category classification model 640, first data associated with a traffic of a first application in a fist data structure including a plurality of first time points and a plurality of first network parameter groups respectively corresponding to the plurality of first time points, identifying that the traffic of the first application corresponds to a first category. The method of operating the electronic device 101 may include an operation of performing at least one operation causing transmission and/or reception of a first traffic of the first application through a first data transmission path corresponding to the first category.

According to an embodiment, the method of operating the electronic device 101 may include an operation of, based on result of inputting, into the traffic category classification model 640, second data associated with a traffic of the first application in a second data structure including a plurality of second time points which is different from the plurality of first time points and a plurality of second network parameter group respectively corresponding to the plurality of second time points, identifying that the traffic of the first application corresponds to a second category which is different from the first category. The method of operating the electronic device 101 may include an operation of performing at least one operation causing transmission and/or reception of a second traffic of the first application through a second data transmission path corresponding to the second category, in replacement of the second data transmission path.

According to an embodiment, the operation of performing the at least one operation causing the transmission and/or reception of the second traffic of the first application through the second data transmission path corresponding to the second category may include an operation of performing at least one operation for establishing the second data transmission path, based on identifying that a data transmission path corresponding to the second category does not exist.

According to an embodiment, the operation of performing the at least one operation causing the transmission and/or reception of the second traffic of the first application through the second data transmission path corresponding to the second category may include an operation of performing at least one operation for associating the second traffic of the first application with the second data transmission path, based on identifying that a data transmission path corresponding to the second category exists.

According to an embodiment, the operation of performing the at least one operation for associating the second traffic of the first application with the second data transmission path may include an operation of performing at least one operation for associating the second traffic of the first application with a network interface corresponding to the second data transmission path, based on identifying that a data transmission path corresponding to the second category exists.

According to an embodiment, the method of operating the electronic device 101 may include an operation of identifying a first route selection descriptor corresponding to the first category with reference to a URSP rule. The at least one operation may include an operation of performing at least one operation for establishing the first data transmission path corresponding to the first route selection descriptor.

According to an embodiment, each of the plurality of first network parameter groups may include at least one parameter identified based on the number of uplink packets, a log value of the number of uplink packets, the size of uplink packets, a log value of the size of uplink packets, the number of downlink packets, a log value of the number of downlink packets, the size of downlink packets, a log value of the size of downlink packets, a time gap between uplink packets, and/or a gap between downlink packets.

According to an embodiment, each of the plurality of first network parameter groups may include at least one parameter identified based on comparison result between information associated with uplink and information associated with downlink.

According to an embodiment, each of the plurality of first network parameter groups may include at least one parameter identified based on a degree of an increase or decrease in information associated with uplink and/or a degree of an increase or decrease in information associated with downlink.

According to an embodiment, the method of operating the electronic device 101 may include an operation of performing scaling so that each of the plurality of first network parameter groups has a scaled value.

According to an embodiment, the method of operating the electronic device 101 may include an operation of performing a clipping operation so that scaled result is included in a designated range.

According to an embodiment, the operation of identifying that the traffic of the first application corresponds to the first category may include an operation of identifying that the traffic of the first application corresponds to the first category, based on the inference result for the first category of the traffic category classification model 640 being larger than or equal to a designated threshold.

According to an embodiment, the method of operating the electronic device 101 may include an operation of, based on inference result for the first category of the traffic category classification model 640 being smaller than a designated threshold, identifying that the traffic of the first application corresponds to the first category, based on a history of the traffic of the first application transmitted and/or received through the first data transmission path.

According to an embodiment, the first data may further include additional groups respectively corresponding to the plurality of first time points.

According to an embodiment, the first data may further include a plurality of second network parameter groups respectively corresponding to the plurality of first time points which are different from the plurality of first network parameter groups.

The electronic device 101 according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120, the first communication processor 212, the second communication processor 214, the unified communication processor 260, or the communication processor 431) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

While this invention has been described with reference to illustrative embodiments, this description is not intended to be construed in a limiting sense. Various modifications and combinations of the illustrative embodiments, as well as other embodiments of the invention, may be apparent to persons skilled in the art upon reference to the description. It is therefore intended that the appended claims encompass any such modifications or embodiments.

## Claims

1. An electronic device, comprising:
at least one processor; and
a memory storing at least one instruction that, when individually or collectively executed by the at least one processor, causes the electronic device to:
identify, based on result of inputting, to a traffic category classification model, first data associated with traffic of a first application consisting of a fist data structure comprising a plurality of first time points and a plurality of first network parameter groups respectively corresponding to the plurality of first time points, that the traffic of the first application corresponds to a first category, and
perform at least one operation causing transmission and/or reception of a first traffic of the first application through a first data transmission path corresponding to the first category.

2. The electronic device of claim 1, wherein the at least one instruction, when individually or collectively executed by the at least one processor, further causes the electronic device to:
identify, based on result of inputting, to the traffic category classification model, second data associated with traffic of the first application consisting of a second data structure comprising a plurality of second time points which is different from the plurality of first time points and a plurality of second network parameter group respectively corresponding to the plurality of second time points, that the traffic of the first application corresponds to a second category which is different from the first category, and
perform at least one operation causing transmission and/or reception of a second traffic of the first application through a second data transmission path corresponding to the second category, in replacement of the first data transmission path.

3. The electronic device of any one of claim 1 to claim 2, wherein the at least one instruction, when individually or collectively executed by the at least one processor, further causes the electronic device to:
perform at least one operation for establishing the second data transmission path, based on determining that a data transmission path corresponding to the second category does not exist.

4. The electronic device of any one of claim 1 to claim 3, wherein the at least one instruction, when individually or collectively executed by the at least one processor, further causes the electronic device to:
perform at least one operation for associating the second traffic of the first application with the second data transmission path, based on determining that a data transmission path corresponding to the second category exists.

5. The electronic device of any one of claim 1 to claim 4, wherein the at least one instruction, when individually or collectively executed by the at least one processor, further causes the electronic device to:
perform at least one operation for associating the second traffic of the first application with a network interface corresponding to the second data transmission path, based on determining that the data transmission path corresponding to the second category exists.

6. The electronic device of any one of claim 1 to claim 5, wherein the at least one instruction, when individually or collectively executed by the at least one processor, further causes the electronic device to:
determine a first route selection descriptor corresponding to the first category based on a user equipment route selection policy (URSP) rule, and
perform at least one operation for establishing the first data transmission path corresponding to the first route selection descriptor.

7. The electronic device of any one of claim 1 to claim 6, wherein each of the plurality of first network parameter groups comprises at least one of a number of uplink packets, a log value of the number of uplink packets, a size of uplink packets, a log value of the size of uplink packets, a number of downlink packets, a log value of the number of downlink packets, a size of downlink packets, a log value of the size of downlink packets, a first time gap between uplink packets, or a second time gap between downlink packets.

8. The electronic device of any one of claim 1 to claim 7, wherein each of the plurality of first network parameter groups comprises at least one parameter identified based on a comparison result between information associated with uplink and information associated with downlink.

9. The electronic device of any one of claim 1 to claim 8, wherein each of the plurality of first network parameter groups comprises at least one parameter identified based on a first degree of increase or decrease in information associated with uplink communications, or a second degree of increase or decrease in information associated with downlink communications.

10. The electronic device of any one of claim 1 to claim 9, wherein the at least one instruction, when individually or collectively executed by the at least one processor, further causes the electronic device to:
scaling each of the plurality of first network parameter groups such that each of the plurality of first network parameter groups has a scaled value.

11. The electronic device of any one of claim 1 to claim 10, wherein the at least one instruction, when individually or collectively executed by the at least one processor, further causes the electronic device to:
clip the scaled value of each of the plurality of first network parameter groups within a designated value range.

12. The electronic device of any one of claim 1 to claim 11, wherein the at least one instruction, when individually or collectively executed by the at least one processor, further causes the electronic device to:
identify that the first traffic of the first application corresponds to the first category, based on an inference result for the first category of the traffic category classification model being larger than or equal to a designated threshold.

13. The electronic device of any one of claim 1 to claim 12, wherein the at least one instruction, when individually or collectively executed by the at least one processor, further causes the electronic device to:
identify, based on an inference result for the first category of the traffic category classification model being smaller than a designated threshold, that the traffic of the first application corresponds to the first category, based on history information that the traffic of the first application is transmitted and/or received through the first data transmission path.

14. A non-transitory computer-readable storage medium storing one or more computer-executable instructions that, when executed by at least a part of at least one processor of an electronic device, cause the electronic device to perform at least one operation,
wherein the at least one operation comprises:
identifying, based on a result of inputting, into a traffic category classification model, first data associated with a traffic of a first application in a first data structure comprising a plurality of first time points and a plurality of first network parameter groups respectively corresponding to the plurality of first time points, that the traffic of the first application corresponds to a first category; and
performing at least one operation causing transmission and/or reception of a first traffic of the first application through a first data transmission path corresponding to the first category.

15. A method of operating an electronic device, the method comprising:
identifying, based on a result of inputting into a traffic category classification model, first data associated with a traffic of a first application in a first data structure comprising a plurality of first time points and a plurality of first network parameter groups respectively corresponding to the plurality of first time points, that the traffic of the first application corresponds to a first category; and
performing at least one operation causing transmission and/or reception of a first traffic of the first application through a first data transmission path corresponding to the first category.
